# EUROPÄISCHE PATENTSCHRIFT

(11) **EP 4 252 069 B1**
(45) Veröffentlichungstag und Bekanntmachung des Hinweises auf die Patenterteilung: **15.10.2025**
(21) Anmeldenummer: 21819721.8
(22) Anmeldetag: 23.11.2021
(51) Int. Cl.: G03B 15/06, G03B 17/56, F16M 11/04, F16M 11/20, F16M 13/02

(54) **ABSCHIRMFLAGGENEINRICHTUNG ZUR KOMBINATION MIT EINER REFLEKTOREINRICHTUNG UND STATIVADAPTER ALS KUPPLUNGSEINRICHTUNG HIERZU**
SHIELDING FLAG DEVICE FOR COMBINATION WITH A REFLECTOR DEVICE, AND STAND ADAPTER AS COUPLING DEVICE FOR SAME
DISPOSITIF DE DRAPEAU DE PROTECTION POUR COMBINAISON AVEC UN DISPOSITIF DE RÉFLECTEUR, ET ADAPTATEUR DE SUPPORT COMME DISPOSITIF D'ACCOUPLEMENT POUR CELUI-CI

(30) Priorität: 24.11.2020 DE 202020004905 U; 09.06.2021 DE 202021002019 U
(43) Veröffentlichungstag der Anmeldung: 04.10.2023
(73) Patentinhaber: Dedo Weigert Film GmbH, 80807 München (DE)
(72) Erfinder: WEIGERT, Dedo, 80935 München (DE)
(74) Vertreter: Richter, Thomas Kurt Reinhold
(86) Internationale Anmeldenummer: PCT/EP2021/000147
(87) Internationale Veröffentlichungsnummer: WO 2022/111845

(56) Entgegenhaltungen:
- EP-A1- 0 059 767
- DE-A1- 19 600 382
- KR-A- 20090 013 470
- US-A- 3 852 582
- US-A- 4 544 120
- US-A- 5 924 669
- US-B1- 6 176 598
- US-B1- 7 399 097
- WEIGERT: "Lightstream dedolight", 30 April 2019 (2019-04-30), pages 1 - 76, XP055893879, Retrieved from the Internet <URL:https://www.dedoweigertfilm.de/weblication/grid5/tmpHTTP/_download_20236ff3988c8f362af87a44d0c230c8/DLBR_Lightstream_ENG0419-OP_HighRes.pdf> [retrieved on 20220221]

## Beschreibung

Die vorliegende Erfindung betrifft ganz allgemein das technische Gebiet der Beleuchtungstechnik im Bereich der Video-, Film-, Foto- und Fernsehanwendungen und dabei hauptsächlich die Beleuchtungstechnik im Bereich der Video-, Film-, Foto- und Fernsehstudioanwendungen. Darüber hinaus betrifft die vorliegende Erfindung ganz allgemein das technische Gebiet der Stativadapter und dabei insbesondere solche Stativadapter, die im technischen Bereich der Beleuchtungstechnik für Video-, Film-, Foto- und Fernsehanwendungen von Bedeutung sind.

Im Bereich der Beleuchtungstechnik für Video-, Film-, Foto- und Fernsehanwendungen werden regelmäßig für die Ausleuchtung von Video- und/oder Film- und/oder Fernsehsets sowie von zu fotografierenden Arrangements neben Scheinwerfern unterschiedlichster Art auch separat positionierbare Reflektoren eingesetzt, um das von dem Scheinwerfer oder den Scheinwerfern bereitgestellte Licht in gezielter und teilweise sehr komplexer und kunstvoller Weise zu lenken, zu reflektieren, zu mischen, zu akzentuieren und dabei in seinen Eigenschaften und seiner Stimmung zu beeinflussen, mithin das Licht zu komponieren derart, dass am Ende genau die von dem Fotografen, Kameramann, Beleuchter und/oder Regisseur gewünschte Szenenausleuchtung entsteht.

Zu diesem Zweck wird häufig das Licht mindestens eines Scheinwerfers auf mindestens einen separat von dem Scheinwerfer positionierten Reflektor gerichtet. Derartige Reflektoren sind bereits seit sehr langer Zeit in der Beleuchtungstechnik für Video-, Film-, Foto- und Fernsehanwendungen in Gebrauch und dem einschlägigen Fachmann, einem Fotografen, Kameramann, Beleuchter und/oder Regisseur, aus seiner täglichen Praxis bekannt. Es handelt sich dabei regelmäßig um steife oder zusammenfaltbare flächenhafte Konstruktionen, bei denen mindestens eine Oberflächenseite aus solchem Material besteht oder mit solchem Material beschichtet ist, welches definierte Lichtreflexionseigenschaften aufweist. Hierzu sind Materialien unterschiedlichster Eigenschaften in Gebrauch, aus denen der Fotograf, Kameramann, Beleuchter und/oder Regisseur zum Zwecke der Lichtkomposition auswählen kann. Von ihrer Form her sind die separat vom Scheinwerfer zu positionierenden Reflektoren meistens rund, rechteckig oder rotationssymmetrisch vieleckig. Dies alles ist dem Fachmann aus dem Stand der Technik und seiner praktischen beleuchtungstechnischen Arbeit geläufig. Nur rein beispielhaft sei in diesem Zusammenhang verwiesen auf die im vorliegenden Zusammenhang einschlägigen Reflektoren und deren Anordnungen, die auf den Seiten 14 bis 24, 42 bis 47 sowie 74 und 75 der Broschüre dedolight Lightstream, English, 04/19 der Dedo Weigert Film GmbH, München, 2019 zu sehen und beschrieben sind.

Insbesondere bei Video-, Film-, Foto- und Fernsehaufnahmen in Studios, vor allem in relativ kleinen Studios, aber gelegentlich auch bei Video-, Film-, Foto- und Fernsehaufnahmen im Freien ist es wünschenswert, den Scheinwerfer einerseits und den separat vom Scheinwerfer positionierten, vom Scheinwerfer angeleuchteten Reflektor andererseits so aufeinander abzustimmen, dass möglichst kein Teil des von dem Scheinwerfer kommenden Lichtes am Reflektor vorbeigeht. Das liegt darin begründet, dass solches am Reflektor vorbeigehende Licht insbesondere in Studios, aber gelegentlich auch im Freien, nach kürzerer oder längerer Strecke auf weitere reflektierende Flächen trifft und dann von dort als störendes Licht in die auszuleuchtende Szene eingestreut wird. Andererseits ist es regelmäßig wünschenswert, die vom Reflektor bereitgestellte lichtreflektierende Fläche möglichst vollständig zur Lichtreflexion auszunutzen, um nicht ständig mit weit überdimensionierten Reflektoren arbeiten zu müssen, die dauerhaft Platz wegnehmen würden, der in vielen Studios, insbesondere in relativ kleinen oder auch mittelgroßen Studios, meist ohnehin nicht in ausreichendem Maße vorhanden ist. Da es im Stand der Technik in der Praxis aus verschiedenen technischen Gründen, insbesondere aus Gründen einer häufig gewünschten lichtintensitätsmäßig möglichst gleichförmigen Ausleuchtung der Reflektorfläche - jedenfalls soweit dies bei Schrägstellung des Reflektors in Bezug auf den ihn unmittelbar anleuchtenden Scheinwerfer überhaupt möglich ist -, und aus Gerätebevorratungsgründen, insbesondere Scheinwerferbevorratungsgründen, sehr häufig nicht möglich ist zu verhindern, dass der von dem zur Verfügung stehenden Scheinwerfer auf den Reflektor treffende Lichtkegel oder Lichtbereich größer als die Reflektorfläche ist und somit die oben beschriebene Streulichtgefahr eintritt, behilft sich der Fachmann im Stand der Technik mit lichtabsorbierenden Flaggen oder Fahnen, die zu allen Seiten des Reflektors separat aufgestellt oder aufgehängt werden. Dies ist allerdings mit erheblichem Arbeits-, Material- und Platzaufwand verbunden. Jede einzelne lichtabsorbierende Flagge benötigt ihr eigenes Stativ oder ihre eigene Aufhängung. Bedenkt man, dass a) an einem Video-, Film-, Foto- oder Fernsehset regelmäßig nicht nur ein einziger Reflektor der vorstehend geschilderten Art, sondern mehrere, manchmal mehr als zehn derartige Reflektoren gleichzeitig verwendet werden, b) die Positionen der Reflektoren regelmäßig von Szene zu Szene verändert werden müssen, c) dabei einzelne Reflektoren manchmal für eine Szene zu einer Gruppe zusammengefasst werden, so dass sich im Ergebnis ein größerer Reflektor ergibt, und bei der nächsten Szene diese Reflektoren häufig wieder vereinzelt werden, und dass ferner d) zu jedem einzelnen der sich effektiv ergebenden Reflektoren unterschiedlicher Größen nach dem Stand der Technik jeweils vier separat zu montierende lichtabsorbierende Flaggen jeweils entsprechender Größen gehören, so erkennt man, dass es wünschenswert ist, den mit der Verwendung der vorstehend genannten lichtabsorbierenden Flaggen verbundenen Arbeits- und Platzaufwand zu reduzieren.

Ein ähnliches Problem tritt auf, wenn es aus Lichtkompositionsgründen erwünscht oder erforderlich ist, einen sogenannten "harten" Reflektor, d.h. einen Reflektor mit einem sehr hohen Reflexionsvermögen, großflächig zu umgeben von reflektierendem Material mit geringerem Reflexionsvermögen. Hier behilft man sich in der Praxis dann ebenfalls ganz ähnlich wie oben beschrieben mit Flaggen, nur dass die Flaggen nun lichtreflektierend, aber eben mit einem geringeren Reflexionsvermögen als der von ihnen umgebene "harte" Reflektor, sind. Aus der Praxis ist in diesem Zusammenhang ein Aufbau bekannt, bei dem zentral vor eine sehr große, "weich" reflektierende und allgemein breit streuende Fläche aus textilem Material ein kleinerer "harter" Reflektor gesetzt ist. Die genannte sehr große, "weich" reflektierende und allgemein breit streuende Fläche aus textilem Material ist in einem Rahmen gehaltert, der von mehreren Stativen getragen wird, woraus ähnlich wie bei der Verwendung mehrerer separater Flaggen ein erheblicher Material- und Platzaufwand und insbesondere ein großer Arbeitszeitaufwand beim Aufbauen und Umsetzen der eben genannten Kombination resultiert. Systeme zur Kombination von Reflektoren und Abschirmflaggen sind im Stand der Technik beispielsweise in US4544120A und DE19600382A gezeigt.

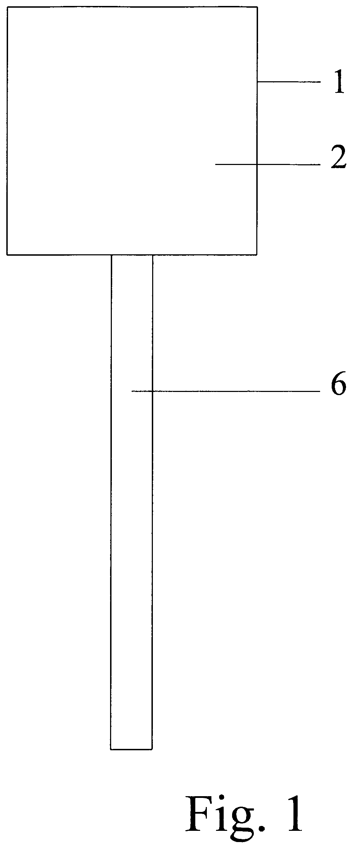

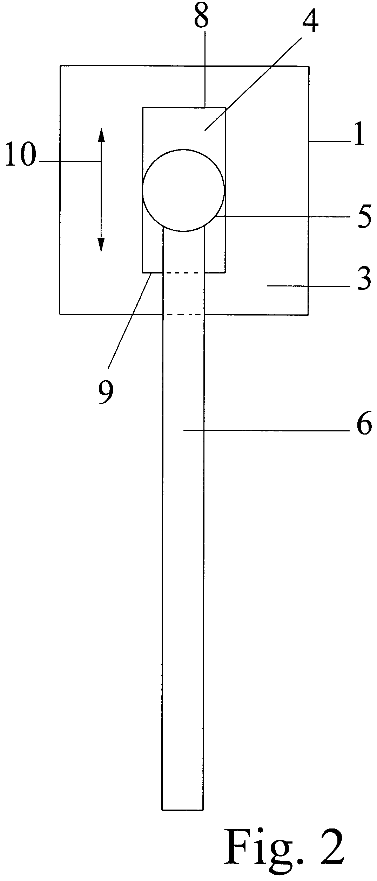

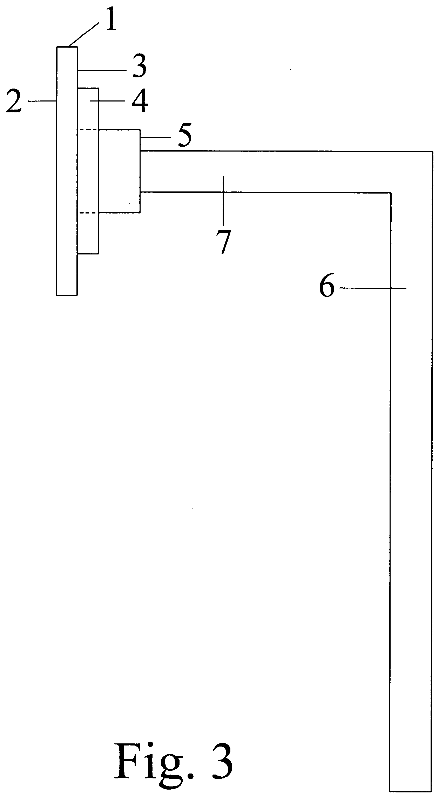

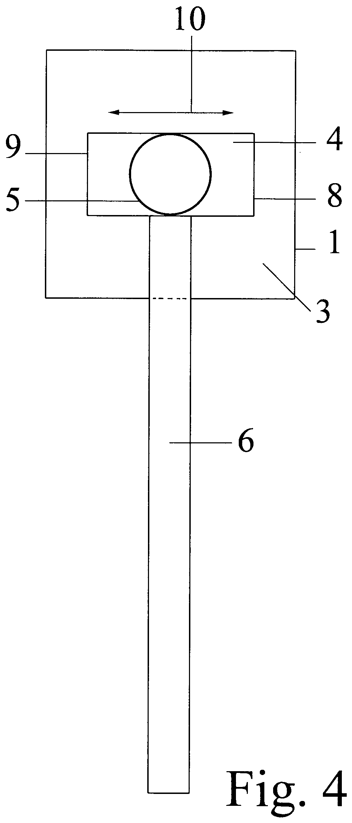

Im vorliegenden Zusammenhang von besonderem Interesse sind Reflektoreinrichtungen der Art, wie sie auf den Seiten 42 bis 47 der Broschüre dedolight Lightstream, English, 04/19 der Dedo Weigert Film GmbH, München, 2019 zu sehen und beschrieben sind. Rein schematisch und nicht maßstabsgerecht ist eine solche aus dem Stand der Technik bekannte Reflektoreinrichtung in den Fig. 1 bis 4 dargestellt. Fig. 1 zeigt rein schematisch und nicht maßstabsgerecht die aus dem Stand der Technik bekannte Reflektoreinrichtung mit Stativ 6 von vorne, d.h. mit Blick auf die lichtreflektierende Vorderseite 2 gesehen. Fig. 2 zeigt rein schematisch und nicht maßstabsgerecht die aus dem Stand der Technik bekannte Reflektoreinrichtung mit Stativ 6 von hinten, d.h. mit Blick auf die der Vorderseite 2 gegenüberliegende Rückseite 3 gesehen. Fig. 3 zeigt rein schematisch und nicht maßstabsgerecht die aus dem Stand der Technik bekannte Reflektoreinrichtung mit Stativ 6, 7 in einer Seitenansicht. Fig. 4 zeigt rein schematisch und nicht maßstabsgerecht die aus dem Stand der Technik bekannte Reflektoreinrichtung von Fig. 2 mit Stativ 6 in einer gegenüber der Darstellung von Fig. 2 um 90° nach rechts gedrehten Arretierposition.

Die in den Fig. 1 bis 4 rein schematisch und nicht maßstabsgerecht dargestellte Reflektoreinrichtung aus dem Stand der Technik ist ein flächenhaft ausgeführtes Gebilde 1 mit einer Vorderseite 2 und einer Rückseite 3. Die Vorderseite 2 dieses flächenhaft ausgeführten Gebildes 1 ist lichtreflektierend ausgebildet, und die Rückseite 3 ist mit einer Schieneneinrichtung 4 versehen. Die Schieneneinrichtung 4 ist so eingerichtet, dass in sie eine ferner vorgesehene und an die Schieneneinrichtung 4 angepasste Kupplungseinrichtung 5 derart arretierbar eingreifen kann, dass eine Lage der Schieneneinrichtung 4 relativ zur Kupplungseinrichtung 5 in Längsrichtung der Schieneneinrichtung 4 einstellbar veränderbar ist und die Kupplungseinrichtung 5 in mehreren unterschiedlichen Positionen bezogen auf die Längsrichtung der Schieneneinrichtung 4 in der Schieneneinrichtung 4 arretierbar ist. Die Veränderbarkeit der relativen Lage von Schieneneinrichtung 4 und Kupplungseinrichtung 5 zueinander in Längsrichtung der Schieneneinrichtung 4 ist in den Fig. 2 und 4 jeweils durch den in den beiden eben genannten Figuren zu sehenden Doppelpfeil 10 angedeutet. Die Kupplungseinrichtung 5 ist zur lösbaren Befestigung des mit der Schieneneinrichtung 4 versehenen flächenhaft ausgeführten Gebildes 1 an einer Stativeinrichtung 6, 7, so wie dies in den Fig. 2 bis 4 rein schematisch und nicht maßstabsgerecht angedeutet ist, und/oder an einer Aufhängungseinrichtung vorgesehen und entsprechend ausgebildet.

Aus dem Stand der Technik ist ferner bekannt, bei derartigen Reflektoreinrichtungen die Schieneneinrichtung 4 und die Kupplungseinrichtung 5 so einzurichten und aufeinander abzustimmen, dass es bei festgehaltener Position zum Arretieren der Kupplungseinrichtung 5 in Bezug auf die Längsrichtung der Schieneneinrichtung 4 mindestens zwei radial unterschiedliche Stellungen zum Arretieren der Kupplungseinrichtung 5 in der Schieneneinrichtung 4 gibt, wobei ein Übergang zwischen diesen beiden eben genannten radial unterschiedlichen Stellungen zum Arretieren der Kupplungseinrichtung 5 in der Schieneneinrichtung 4 durch Drehung der Schieneneinrichtung 4 relativ zur Kupplungseinrichtung 5 um einen bestimmten Drehwinkel erfolgt und die Drehung um eine Achse erfolgt, die sowohl durch die Vorderseite 2 als auch durch die Rückseite 3 als auch durch die Schieneneinrichtung 4 als auch durch die Kupplungseinrichtung 5 verläuft und orthogonal zur Schieneneinrichtung 4 ausgerichtet ist. Ein Vergleich der Fig. 2 mit der Fig. 4 verdeutlicht eine solche Drehung. In beiden eben genannten Figuren ist die Position der Kupplungseinrichtung 5 und der Stativeinrichtung 6, 7 im Raum unverändert. In Fig. 4 wurde jedoch die Schieneneinrichtung 4 - und dementsprechend das gesamte flächenhaft ausgeführte Gebilde 1 mit ihr - gegenüber der räumlichen Lage aus Fig. 2 um 90° nach rechts gedreht. Sowohl in der Stellung von Fig. 2 als auch in der Stellung von Fig. 4 ist die Kupplungseinrichtung 5 in der Schieneneinrichtung 4 arretiert und an der Stativeinrichtung 6, 7 fixiert.

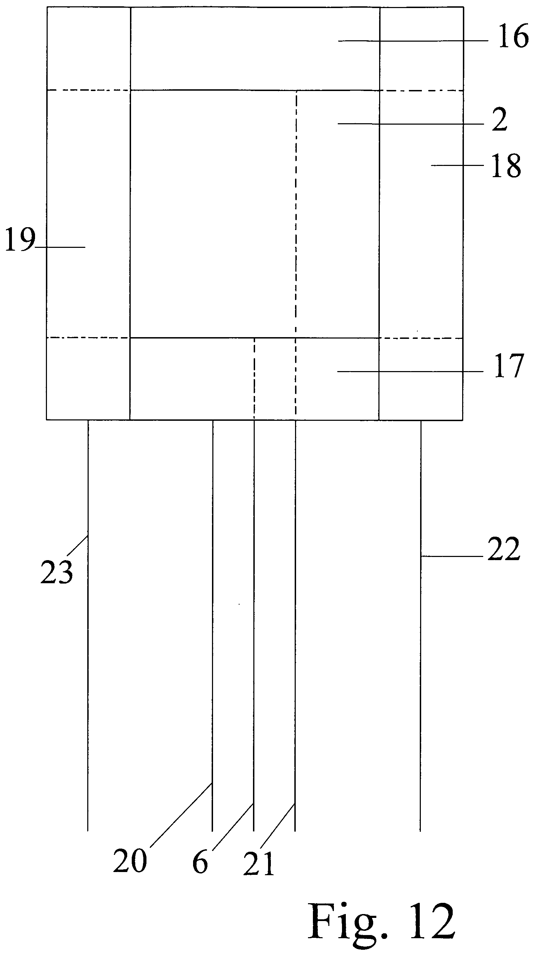

Fig. 12 verdeutlicht rein schematisch den bereits oben beschriebenen Sachverhalt aus dem Stand der Technik, dass lichtabsorbierende Flaggen oder Fahnen 16, 17, 18, 19 zu allen Seiten der Reflektoreinrichtung separat aufgestellt werden müssen, um ein Vorbeigehen von Licht an der Reflektoreinrichtung und die damit verbundenen unerwünschten Folgen zu verhindern. Das erfordert jedoch schon allein bei einer einzigen Reflektoreinrichtung zusätzlich zu der bereits in den Fig. 1 bis 4 gezeigten Stativeinrichtung 6, 7 vier weitere Stativeinrichtungen 20, 21, 22, 23, nämlich jeweils eine der weiteren Stativeinrichtungen 20, 21, 22, 23 zum Tragen jeweils einer der vier lichtabsorbierenden Flaggen oder Fahnen 16, 17, 18, 19. Ein Vergleich der Fig. 12 mit der Fig. 1 macht unmittelbar den mit der Verwendung der vorstehend genannten lichtabsorbierenden Flaggen oder Fahnen 16, 17, 18, 19 verbundenen Material- und Platzaufwand deutlich, woraus sich unmittelbar ein entsprechend hoher Arbeitsaufwand für den Auf- und (bei Video-, Film-, Foto- und Fernsehsets sehr häufig notwendigen) Umbau derartiger aus dem Stand der Technik bekannter Flaggen-Reflektor-Kombinationen ergibt.

Genau die gleichen Probleme betreffend Material- und Platzaufwand sowie Arbeitsaufwand ergeben sich natürlich auch dann, wenn aus lichtkompositorischen Gründen keine lichtabsorbierenden Flaggen, sondern Flaggen mit gewissen lichtreflektierenden Eigenschaften - vgl. die diesbezüglichen Erläuterungen weiter oben - verwendet werden sollen. Für den Material- und Platzaufwand sowie Arbeitsaufwand beim Auf- und Umbau sind die Lichtreflexionseigenschaften der Flaggen ohne jede Bedeutung und Unterschied.

Im folgenden werden daher alle diese Flaggen - unabhängig von ihren Lichtreflexionseigenschaften und unabhängig von ihrer Lichtdurchlässigkeit oder Lichtundurchlässigkeit - unter dem Oberbegriff "Abschirmflagge" zusammengefasst.

Wie bereits oben zum Ausdruck gebracht wurde, ist es wünschenswert, den mit der Verwendung der vorstehend genannten Abschirmflaggen 16, 17, 18, 19 verbundenen Arbeits- und Platzaufwand zu reduzieren.

Der Erfindung liegt als Aufgabe zugrunde, eine Kombination einer Abschirmflaggeneinrichtung mit einer Reflektoreinrichtung bereitzustellen, welche gegenüber aus dem Stand der Technik bekannten Reflektor-Abschirmflaggen-Kombinationen mit geringerem Arbeitsaufwand handhabbar ist.

Erfindungsgemäß wird diese Aufgabe gelöst durch eine Kombinationsvorrichtung nach Anspruch 1 oder 2.

Der Vorteil der erfindungsgemäßen Kombinationsvorrichtung besteht darin, dass sie gegenüber dem Stand der Technik mit weniger Stativ- bzw. Aufhängungseinrichtungen auskommt, was den Material-, Platz- und Arbeitsbedarf reduziert, und dass sie mittels weniger Handgriffe und nur geringem Arbeitsaufwand rasch an unterschiedliche Lichteinfallbedingungen und Reflexionswünsche angepasst werden kann.

Vorteilhafte und bevorzugte Ausführungsformen der erfindungsgemäßen Kombinationsvorrichtung sind Gegenstand der Ansprüche 3-10.

Besonders bevorzugt lassen sich mehrere dieser Kombinationsvorrichtungen sehr einfach und mit wenigen Handgriffen zu einer gemeinsamen, also insgesamt größeren, Reflektorfläche vereinigen und auch wieder zurück vereinzeln.

Arbeitet man dabei mit jeweils einer schwarzen Abschirmflagge, so kann immer mit gegenüber dem Stand der Technik geringerem Arbeitsaufwand gewährleistet werden, dass nicht auf die jeweilige reflektierende Fläche treffendes Licht absorbiert, also ausgelöscht wird und somit nicht auf Umwegen als störendes Streulicht in die auszuleuchtende Szene hineingelangt. Auch wenn nichtschwarze Abschirmflaggen verwendet werden, also temporär gezielt ein größerer Kombinations-Reflektor mit beispielsweise einem "hart" reflektierenden Mittelteil und einem "weich" reflektierenden Rand geschaffen werden soll, ist der Auf-, Ab- und Umbau eines solchen größeren Kombinations-Reflektors mit Hilfe der am Anfang dieses Absatzes genannten Ausführungsformen der erfindungsgemäßen Kombinationsvorrichtung mit geringerem Arbeitsaufwand zu bewältigen als verglichen mit Vorrichtungen aus dem Stand der Technik, welche im Ergebnis zwar die gleiche optische Wirkung haben, aber deutlich mehr Stativmaterial benötigen.

In ganz erheblichem Maße besonders und herausragend bevorzugt sind die Ausführungsformen gemäß den Kombinationsvorrichtungen nach Anspruch 7 und nach Anspruch 8 , insbesondere dann, wenn mehrere der erfindungsgemäßen Kombinationsvorrichtungen bzw. deren Ausführungsformen zu einer Kombinationsvorrichtungssystem-Vorrichtung (siehe dazu genauer noch weiter unten) kombiniert werden sollen. Wenn in einem solchen Fall nämlich zwecks differenzierter Ausleuchtung einer Szene die Reflektoren gegeneinander verwinkelt werden sollen, um das von einer einzigen Lichtquelle kommende Lichtstrahlenbündel in verschiedenerlei Richtungen aufzuteilen und umzulenken, so würden bei einer derartigen Verwinkelung der Reflektoren die einzelnen zu den jeweiligen Reflektoren gehörenden Abschirmflaggen miteinander in Konflikt geraten, wenn sich die Lage der Reflektoren im Raum nicht durch Verkippen oder Anwinkeln relativ zu derjenigen Ebene, in welcher die Abschirmflaggen aufgespannt sind, verändern ließe.

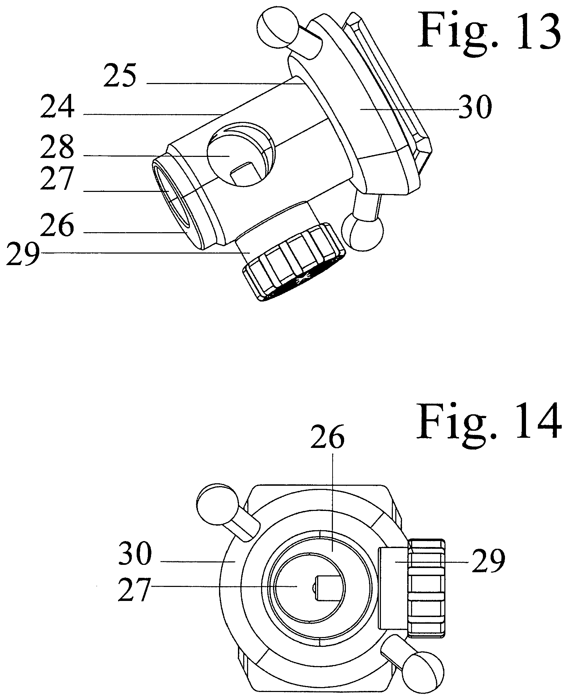

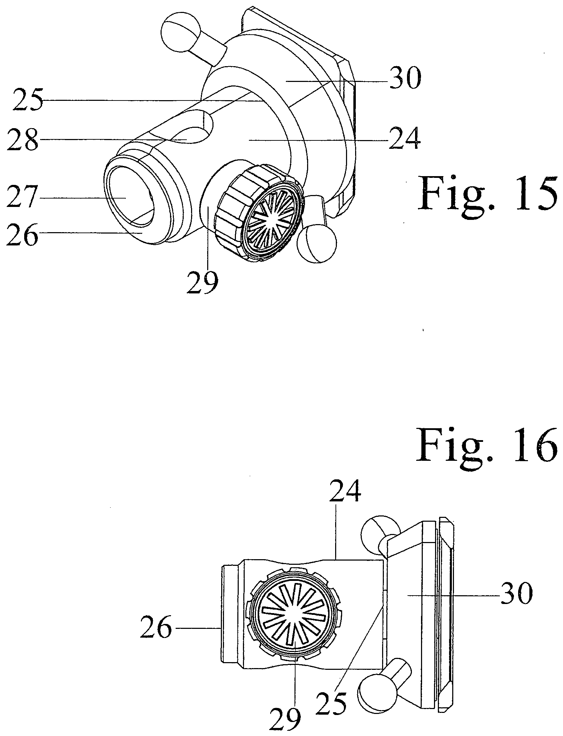

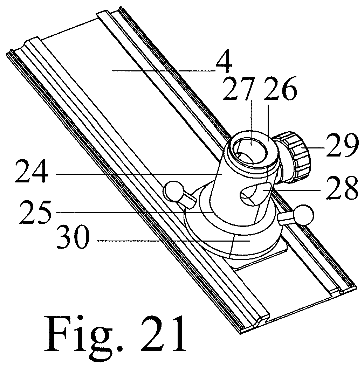

Die Broschüre dedolight Lightstream, English, 04/19 der Dedo Weigert Film GmbH, München, 2019 offenbart auf den Seiten 44 bis 47 eine Reflektoreinrichtung für Video-, Film-, Foto- und Fernsehanwendungen, insbesondere für Video-, Film-, Foto- und Fernsehstudioanwendungen. Die genannte Reflektoreinrichtung ist ein flächenhaft ausgeführtes Gebilde mit einer Vorderseite und einer Rückseite. Die Vorderseite der Reflektoreinrichtung ist lichtreflektierend ausgebildet. Die Rückseite der Reflektoreinrichtung ist mit einer Schieneneinrichtung versehen. Die Schieneneinrichtung ist so eingerichtet, dass in sie eine an die Schieneneinrichtung angepasste Kupplungseinrichtung derart arretierbar eingreifen kann, dass eine Lage der Schieneneinrichtung relativ zur Kupplungseinrichtung in Längsrichtung der Schieneneinrichtung einstellbar veränderbar ist und die Kupplungseinrichtung in mehreren unterschiedlichen Positionen bezogen auf die Längsrichtung der Schieneneinrichtung in der Schieneneinrichtung arretierbar ist. Die Kupplungseinrichtung ist zur lösbaren Befestigung des mit der Schieneneinrichtung versehenen flächenhaft ausgeführten Gebildes an einer Stativeinrichtung und/oder an einer Aufhängungseinrichtung vorgesehen und entsprechend ausgebildet. Die - in der vorstehend genannten Broschüre mit der Handelsbezeichnung "DLR-LOCK" versehene - Kupplungseinrichtung, die man auch als Stativadapter bezeichnen kann und die ferner in den Fig. 13 bis 16 und 21 gezeigt ist, ist dementsprechend an ihrem von der Schieneneinrichtung 4 abgewandten Ende mit einer ersten Sacklochöffnung 27 und einer die erste Sacklochöffnung 27 orthogonal kreuzenden durchgehenden Öffnung 28 zum Einstecken von Stativstäben versehen. Ferner ist - wie bei Stativmuffen und/oder Stativadaptern im Stand der Technik ganz üblich - eine Feststellschraube 29 vorgesehen, welche sich sowohl orthogonal zur ersten Sacklochöffnung 27 als auch orthogonal zu der durchgehenden Öffnung 28 erstreckt und so eingerichtet ist, dass sie sich sowohl zur Arretierung eines in die erste Sacklochöffnung 27 eingesteckten Stativstabs als auch zur Arretierung eines in die durchgehende Öffnung 28 eingesteckten Stativstabs eignet. Die Fig. 13 bis 16 zeigen einen solchen aus dem Stand der Technik unter der Handelsbezeichnung "DLR-LOCK" bekannten Stativadapter in verschiedenen Ansichtsperspektiven, und in Fig. 21 ist ein solcher aus dem Stand der Technik unter der Handelsbezeichnung "DLR-LOCK" bekannter Stativadapter eingesetzt in eine Schieneneinrichtung 4 dargestellt.

In den Ansprüchen 1 bis 10 sowie in den sich weiter unten in Bezug auf all die eben genannten Ansprüche findenden Beschreibungsteilen und den zugehörigen Figuren der vorliegenden Patentanmeldung wird eine spezielle Anwendung der in der Broschüre dedolight Lightstream, English, 04/19 der Dedo Weigert Film GmbH, München, 2019 auf den Seiten 44 bis 47 beschriebenen Reflektoreinrichtung offenbart, bei der diese Reflektoreinrichtung mit einer speziellen, Material- und Platzaufwand sowie Arbeitszeitaufwand beim Aufbauen und Umsetzen sparenden Abschirmflaggeneinrichtung kombiniert ist. Entscheidend dabei ist, dass die in Anspruch 1 und 2 der vorliegenden Patentanmeldung erwähnte Kupplungseinrichtung, welche man auch als Stativadapter bezeichnen kann, als Basis einer um sie herum aufgespannten Abschirmflagge dient. Die bzw. der in der Broschüre dedolight Lightstream, English, 04/19 der Dedo Weigert Film GmbH, München, 2019 auf den Seiten 44 bis 47 gezeigte Kupplungseinrichtung bzw. Stativadapter "DLR-LOCK" (vgl. auch die Fig. 13 bis 16 und 21) ist - zumindest als solcher alleine - für eine derartige ganz spezielle Anwendung jedoch weder ausgelegt noch geeignet.

Der Erfindung liegt deshalb ferner die Aufgabe zugrunde, einen Stativadapter bereitzustellen, der geeignet ist, als Basis zum um ihn herum Aufspannen einer Abschirmflagge zu dienen.

Erfindungsgemäß wird diese Aufgabe gelöst durch einen Stativadapter nach Anspruch 11. Dieser erfindungsgemäße Stativadapter ist besonders gut geeignet, entweder als die Kupplungseinrichtung in der erfindungsgemäßen Kombinationsvorrichtung nach Anspruch 1 und 2 oder zumindest als ein Bestandteil der Kupplungseinrichtung in der erfindungsgemäßen Kombinationsvorrichtung nach Anspruch 1 und 2 zu fungieren. Der Einsatz entweder als die Kupplungseinrichtung in der erfindungsgemäßen Kombinationsvorrichtung nach Anspruch 1 und 2 oder als Bestandteil der Kupplungseinrichtung in der erfindungsgemäßen Kombinationsvorrichtung nach Anspruch 1 und 2 ist Hauptverwendungszweck des erfindungsgemäßen Stativadapters.

Vorteilhafte und bevorzugte Ausführungsformen des erfindungsgemäßen Stativadapters sind Gegenstand der Ansprüche 12-15.

Ganz besonders vorteilhafterweise wird eine erfindungsgemäße Kombinationsvorrichtungssystem-Vorrichtung so eingerichtet, dass sie mehrere Kombinationsvorrichtungen nach Anspruch 7 und/oder nach Anspruch 8 vereinigt und die lichtreflektierenden Vorderseiten aller in der Kombinationsvorrichtungssystem-Vorrichtung enthaltenen Reflektoreinrichtungen vom Lichtkegel eines einzigen Scheinwerfers erreicht werden. Dann ist es nämlich möglich, mittels eines einzigen Scheinwerfers eine derartig umfassende und akzentuierte Szenenausleuchtung zu erreichen, zu welcher im Stand der Technik mehrere, beispielsweise vier oder fünf, verschiedene Scheinwerfer benötigt wurden. Auf diese Weise wird die Anzahl der benötigten Scheinwerfer gegenüber dem Stand der Technik reduziert und so Elektroenergie eingespart, was ganz im Sinne der Medienökologie ist.

Ganz entsprechend medienökologisch fortschrittlich können natürlich auch mehrere einzelne erfindungsgemäße Kombinationsvorrichtungen gemäß den Ausführungsformen von Anspruch 7 und/oder Anspruch 8 gemeinsam eingesetzt werden, ohne von einem einzigen gemeinsamen Haupt-Stativfuß oder einer gemeinsamen Haupt-Stativaufhängung getragen zu werden.

Da alle vorliegend beanspruchten Abschirmflaggeneinrichtungen, Kombinationsvorrichtungen, Kombinationsvorrichtungssystem-Vorrichtungen, Stativadapter bzw. Kupplungseinrichtungen zur Reduzierung von Materialeinsatz und in vielen ihrer Ausführungsformen sogar auch zur Reduzierung der Menge der zur Ausleuchtung einer Szene benötigten Scheinwerfer und damit zur Reduzierung des Elektroenergieverbrauchs im Bereich der Beleuchtungstechnik für Video-, Film-, Foto- und Fernsehanwendungen beitragen, leisten die vorliegend beanspruchten Erfindungen, welche eine gemeinsame allgemeine erfinderische Idee verwirklichen, einen Beitrag zur Weiterentwicklung der Technik im Sinne der Medienökologie.

Vorteilhafte und bevorzugte Ausführungsbeispiele der hier beanspruchten Erfindungen werden nachfolgend anhand von Figuren beschrieben. Es zeigt:
- Fig. 1: rein schematisch und nicht maßstabsgerecht eine aus dem Stand der Technik bekannte Reflektoreinrichtung mit Stativ von vorne gesehen,
- Fig. 2: rein schematisch und nicht maßstabsgerecht die aus dem Stand der Technik bekannte Reflektoreinrichtung mit Stativ von hinten gesehen,
- Fig. 3: rein schematisch und nicht maßstabsgerecht die aus dem Stand der Technik bekannte Reflektoreinrichtung mit Stativ in einer Seitenansicht,
- Fig. 4: rein schematisch und nicht maßstabsgerecht die aus dem Stand der Technik bekannte Reflektoreinrichtung von Fig. 2 mit Stativ in einer gegenüber der Darstellung von Fig. 2 um 90° nach rechts gedrehten Arretierposition,
- Fig. 5: rein schematisch und nicht maßstabsgerecht ein Ausführungsbeispiel einer erfindungsgemäßen Abschirmflaggeneinrichtung samt angefügtem Stativ von hinten gesehen,
- Fig. 6: rein schematisch und nicht maßstabsgerecht ein Ausführungsbeispiel einer erfindungsgemäßen Kombinationsvorrichtung als Kombination aus dem Ausführungsbeispiel der erfindungsgemäßen Abschirmflaggeneinrichtung von Fig. 5 mit dem Ausführungsbeispiel der Reflektoreinrichtung aus den Fig. 1 bis 4 samt angefügtem Stativ in einer Seitenansicht,
- Fig. 7: rein schematisch und nicht maßstabsgerecht das Ausführungsbeispiel der erfindungsgemäßen Kombinationsvorrichtung von Fig. 6 von vorne gesehen mit der lichtreflektierenden Vorderseite der Reflektoreinrichtung in bezogen auf die Abschirmflagge zentraler Position,
- Fig. 8: rein schematisch und nicht maßstabsgerecht das Ausführungsbeispiel der erfindungsgemäßen Kombinationsvorrichtung von Fig. 6 von vorne gesehen mit einer von vorne gesehen nicht sichtbaren Schieneneinrichtung in der in Fig. 2 gezeigten Ausrichtung und mit der lichtreflektierenden Vorderseite der Reflektoreinrichtung in im Vergleich zu Fig. 7 nach unten verschobener Position,
- Fig. 9: rein schematisch und nicht maßstabsgerecht das Ausführungsbeispiel der erfindungsgemäßen Kombinationsvorrichtung von Fig. 6 von vorne gesehen mit der von vorne gesehen nicht sichtbaren Schieneneinrichtung in der in Fig. 2 gezeigten Ausrichtung und mit der lichtreflektierenden Vorderseite der Reflektoreinrichtung in im Vergleich zu Fig. 7 nach oben verschobener Position,
- Fig. 10: rein schematisch und nicht maßstabsgerecht das Ausführungsbeispiel der erfindungsgemäßen Kombinationsvorrichtung von Fig. 6 von vorne gesehen mit der von vorne gesehen nicht sichtbaren Schieneneinrichtung in der in Fig. 4 gezeigten Ausrichtung und mit der lichtreflektierenden Vorderseite der Reflektoreinrichtung in im Vergleich zu Fig. 7 nach links verschobener Position,
- Fig. 11: rein schematisch und nicht maßstabsgerecht das Ausführungsbeispiel der erfindungsgemäßen Kombinationsvorrichtung von Fig. 6 von vorne gesehen mit der von vorne gesehen nicht sichtbaren Schieneneinrichtung in der in Fig. 4 gezeigten Ausrichtung und mit der lichtreflektierenden Vorderseite der Reflektoreinrichtung in im Vergleich zu Fig. 7 nach rechts verschobener Position,
- Fig. 12: rein schematisch und nicht maßstabsgerecht eine aus dem Stand der Technik bekannte Kombination der aus dem Stand der Technik bekannten und in den Fig. 1 bis 4 gezeigten Reflektoreinrichtung mit vier Abschirmflaggen, wobei jede einzelne Abschirmflagge jeweils auf einem eigenen Stativ aufgestellt ist,
- Fig. 13: rein schematisch einen aus dem Stand der Technik unter der Handelsbezeichnung "DLR-LOCK" bekannten Stativadapter in einer perspektivischen Ansicht,
- Fig. 14: rein schematisch den aus dem Stand der Technik bekannten Stativadapter von Fig. 13 in Draufsicht auf ein Ende seines zylinderförmigen Abschnitts,
- Fig. 15: rein schematisch den aus dem Stand der Technik bekannten Stativadapter von Fig. 13 in einer weiteren perspektivischen Ansicht,
- Fig. 16: rein schematisch den aus dem Stand der Technik bekannten Stativadapter von Fig. 13 in einer längsseitigen Draufsicht,
- Fig. 17: rein schematisch ein Ausführungsbeispiel eines erfindungsgemäßen Stativadapters in einer perspektivischen Ansicht,
- Fig. 18: rein schematisch das Ausführungsbeispiel des erfindungsgemäßen Stativadapters von Fig. 17 in einer längsseitigen Draufsicht,
- Fig. 19: rein schematisch das Ausführungsbeispiel des erfindungsgemäßen Stativadapters von Fig. 17 in einer weiteren perspektivischen Ansicht,
- Fig. 20: rein schematisch das Ausführungsbeispiel des erfindungsgemäßen Stativadapters von Fig. 17 in Draufsicht auf ein Ende seines zylinderförmigen Abschnitts,
- Fig. 21: rein schematisch den aus dem Stand der Technik bekannten Stativadapter von Fig. 13 in an eine Schieneneinrichtung angekoppeltem Zustand in einer perspektivischen Ansicht,
- Fig. 22: rein schematisch das Ausführungsbeispiel des erfindungsgemäßen Stativadapters von Fig. 17 in an eine Schieneneinrichtung angekoppeltem Zustand in einer perspektivischen Ansicht,
- Fig. 23: rein schematisch das Ausführungsbeispiel des erfindungsgemäßen Stativadapters von Fig. 17 in an die Schieneneinrichtung angekoppeltem Zustand in einer weiteren perspektivischen Ansicht,
- Fig. 24: rein schematisch und nicht maßstabsgerecht ein Ausführungsbeispiel einer erfindungsgemäßen Kupplungseinrichtung, aufgesteckt auf ein Stativ,
- Fig. 25: rein schematisch und nicht maßstabsgerecht ein mittleres Teil des Ausführungsbeispiels der erfindungsgemäßen Kupplungseinrichtung von Fig. 24,
- Fig. 26: die Darstellung von Fig. 25, ergänzt um eine Arretiereinrichtung,
- Fig. 27: rein schematisch und nicht maßstabsgerecht ein weiteres Ausführungsbeispiel eines erfindungsgemäßen Stativadapters in perspektivischer Ansicht,
- Fig. 28: rein schematisch und nicht maßstabsgerecht das Ausführungsbeispiel des erfindungsgemäßen Stativadapters von Fig. 27 in einer längsseitigen Seitenansicht,
- Fig. 29: den Schnitt B - B von Fig. 28,
- Fig. 30: den Schnitt A - A von Fig. 28,
- Fig. 31: rein schematisch und nicht maßstabsgerecht eine perspektivische Ansicht einiger zusammengesetzter Teile eines Ausführungsbeispiels einer erfindungsgemäßen Kombinationsvorrichtungssystem-Vorrichtung von hinten gesehen,
- Fig. 32: rein schematisch und nicht maßstabsgerecht eine Ansicht des Ausführungsbeispiels der erfindungsgemäßen Kombinationsvorrichtungssystem-Vorrichtung von vorne gesehen mit aneinander anstoßend eingestellten Abschirmflaggen, aber nicht aneinander anstoßend eingestellten Reflektoreinrichtungen,
- Fig. 33: rein schematisch und nicht maßstabsgerecht die Ansicht des Ausführungsbeispiels der erfindungsgemäßen Kombinationsvorrichtungssystem-Vorrichtung von Fig. 32, diesmal allerdings mit aneinander anstoßend eingestellten Reflektoreinrichtungen, und
- Fig. 34: rein schematisch und nicht maßstabsgerecht die Ansicht des Ausführungsbeispiels der erfindungsgemäßen Kombinationsvorrichtungssystem-Vorrichtung von Fig. 32, ergänzt um eine Akzent-Reflektoreinrichtung.

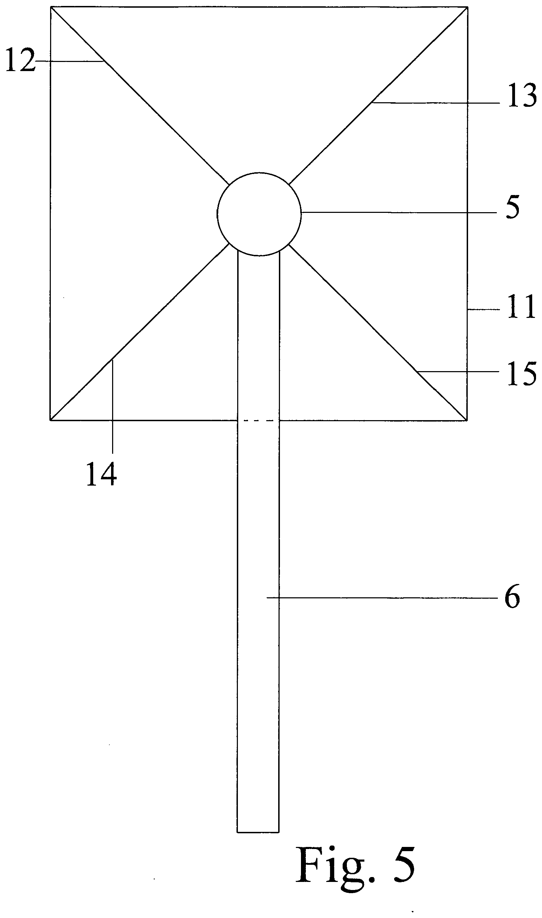

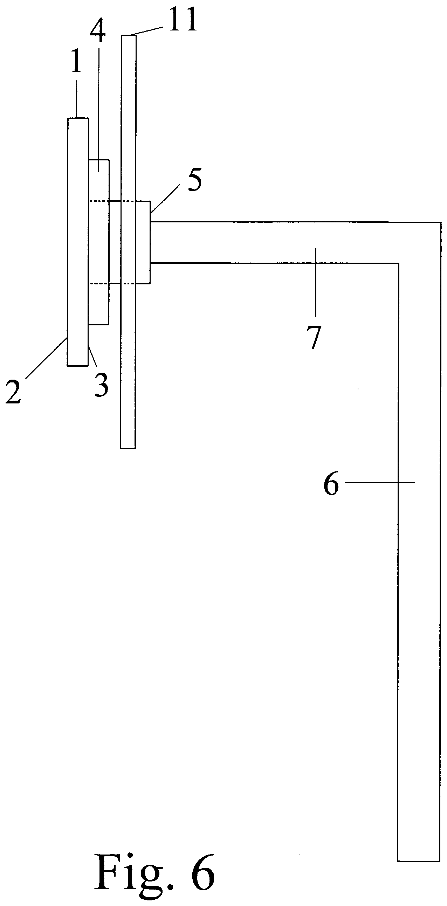

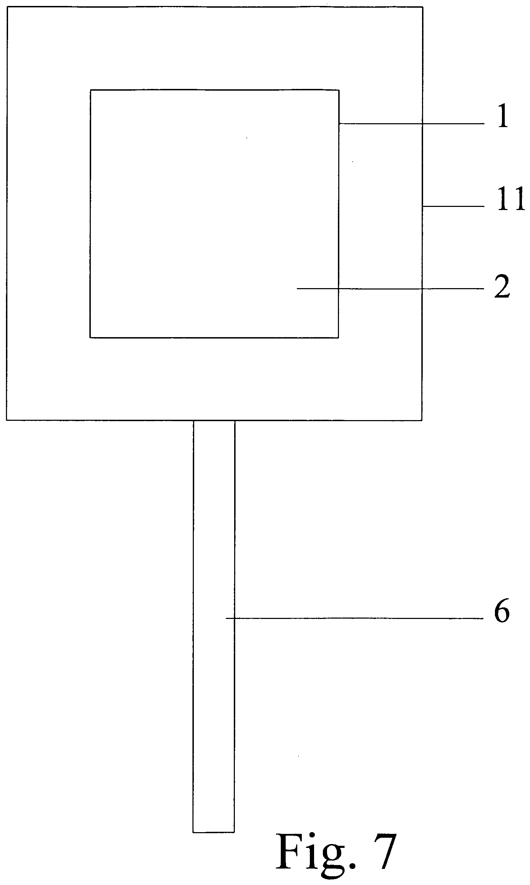

Die Fig. 5 bis 7 sind im Zusammenhang zu betrachten und zeigen rein schematisch ein Ausführungsbeispiel einer erfindungsgemäßen Abschirmflaggeneinrichtung (Fig. 5) bzw. ein Ausführungsbeispiel einer erfindungsgemäßen Kombinationsvorrichtung als Kombination dieses Ausführungsbeispiels der erfindungsgemäßen Abschirmflaggeneinrichtung mit dem bereits oben in der Beschreibungseinleitung ausführlich beschriebenen und in den Fig. 1 bis 4 gezeigten Ausführungsbeispiel der aus dem Stand der Technik bekannten Reflektoreinrichtung (Fig. 5 bis 7). Dabei zeigt die Fig. 5 die Ansicht von hinten gesehen, Fig. 6 stellt eine Seitenansicht dar, und Fig. 7 zeigt die Ansicht von vorne gesehen, d.h. die Ansicht auf die lichtreflektierende Fläche bzw. Vorderseite 2 der Reflektoreinrichtung. Bestimmte Details sind in den Fig. 1 bis 4, insbesondere in den Fig. 2 und 4, besser zu erkennen, weshalb auch diese Fig. 1 bis 4 beim Studium der nachfolgenden Beschreibungsabschnitte neben den Fig. 5 bis 7 mit betrachtet werden sollten.

Dabei ist die Reflektoreinrichtung in diesem Ausführungsbeispiel ein flächenhaft ausgeführtes Gebilde 1 mit einer Vorderseite 2 und einer Rückseite 3. Die Vorderseite 2 dieses flächenhaft ausgeführten Gebildes 1 ist lichtreflektierend ausgebildet. Die Rückseite 3 ist mit einer Schieneneinrichtung 4 versehen, welche so eingerichtet ist, dass in sie eine ferner vorgesehene und an die Schieneneinrichtung 4 angepasste Kupplungseinrichtung 5 derart arretierbar eingreifen kann, dass eine Lage der Schieneneinrichtung 4 relativ zur Kupplungseinrichtung 5 in Längsrichtung der Schieneneinrichtung 4 einstellbar veränderbar ist und die Kupplungseinrichtung 5 in mehreren unterschiedlichen Positionen bezogen auf die Längsrichtung der Schieneneinrichtung 4 in der Schieneneinrichtung 4 arretierbar ist. Die Kupplungseinrichtung 5 ist zur lösbaren Befestigung des mit der Schieneneinrichtung 4 versehenen flächenhaft ausgeführten Gebildes 1 an einer Stativeinrichtung 6, 7, so wie dies in den Fig. 5 und 6 rein schematisch und nicht maßstabsgerecht angedeutet ist, und/oder an einer Aufhängungseinrichtung vorgesehen und entsprechend ausgebildet. Bis hierhin unterscheidet sich die Reflektoreinrichtung noch nicht von der bereits oben mit Bezug auf die Fig. 1 bis 4 ausführlich beschriebenen und auch auf den Seiten 42 bis 47 der Broschüre dedolight Lightstream, English, 04/19 der Dedo Weigert Film GmbH, München, 2019 dargestellten und beschriebenen Reflektoreinrichtung. Neu im Vergleich zum Stand der Technik ist jedoch nun in Bezug auf die erfindungsgemäße Abschirmflaggeneinrichtung, dass die Kupplungseinrichtung 5 erfindungsgemäß derart eingerichtet ist, dass sie als Basis einer um sie herum aufgespannten Abschirmflagge 11 dient.

Bei dem hier dargestellten Ausführungsbeispiel der erfindungsgemäßen Abschirmflaggeneinrichtung und der erfindungsgemäßen Kombinationsvorrichtung ist die Schieneneinrichtung 4 eine gerade verlaufende Schieneneinrichtung 4 (vgl. dazu insbesondere auch die Fig. 2 und 4).

Bei bevorzugten Ausführungsbeispielen ist die Abschirmflagge 11 so gestaltet und auf das flächenhaft ausgeführte Gebilde 1 abgestimmt, dass es mindestens eine erste Arretierstellung der Kupplungseinrichtung 5 in der Schieneneinrichtung 4 gibt derart, dass in dieser ersten Arretierstellung der Kupplungseinrichtung 5 in der Schieneneinrichtung 4 bei Betrachtung der Kombination der Abschirmflaggeneinrichtung und der Reflektoreinrichtung von der Vorderseite 2 her die Abschirmflagge 11 an jeder Stelle eines gesamten Randes des flächenhaft ausgeführten Gebildes 1 über den Rand des flächenhaft ausgeführten Gebildes 1 hinausragt und somit die Vorderseite 2 vollständig von der Abschirmflagge 11 umrahmt ist, wenn sich die Kupplungseinrichtung 5 in der genannten ersten Arretierstellung in der Schieneneinrichtung 4 befindet. Dies ist in Fig. 7 zu sehen. Hier ist die Schieneneinrichtung 4 so in der Kupplungseinrichtung 5 positioniert und arretiert, dass die Vorderseite 2 der Reflektoreinrichtung genau mittig vor der Abschirmflagge 11 sitzt und von der Abschirmflagge 11 vollständig umrahmt ist. Ein Vergleich der Fig. 7 mit der Fig. 12 zeigt, dass mittels des in Fig. 7 dargestellten Ausführungsbeispiels der erfindungsgemäßen Abschirmflaggeneinrichtung dieselbe optische Wirkung erzielt wird wie mit dem in Fig. 12 gezeigten Aufbau aus dem Stand der Technik, dass jedoch mit der erfindungsgemäßen Abschirmflaggeneinrichtung gegenüber dem Stand der Technik vier Stative eingespart werden, was neben der Materialeinsparung auch unmittelbar zu einer Einsparung von Arbeitszeit und Arbeitsaufwand beim Aufbauen und Umbauen der entsprechenden Einrichtung führt.

Der Vollständigkeit halber sei an dieser Stelle angemerkt, dass bei dem in den Fig. 5 bis 7 dargestellten Ausführungsbeispiel der erfindungsgemäßen Abschirmflaggeneinrichtung bzw. der erfindungsgemäßen Kombinationsvorrichtung die Schieneneinrichtung 4 und die Kupplungseinrichtung 5 auch in rotationstechnischer Hinsicht so ausgeführt sind, wie es aus dem Stand der Technik bekannt ist und weiter oben mit Bezug auf die Fig. 1 bis 4 bereits beschrieben wurde und auch auf den Seiten 42 bis 47 der Broschüre dedolight Lightstream, English, 04/19 der Dedo Weigert Film GmbH, München, 2019 dargestellt und beschrieben ist: Die Schieneneinrichtung 4 und die Kupplungseinrichtung 5 sind so eingerichtet und aufeinander abgestimmt, dass es bei festgehaltener Position zum Arretieren der Kupplungseinrichtung 5 in Bezug auf die Längsrichtung der Schieneneinrichtung 4 mindestens zwei radial unterschiedliche Stellungen zum Arretieren der Kupplungseinrichtung 5 in der Schieneneinrichtung 4 gibt, wobei ein Übergang zwischen diesen beiden eben genannten radial unterschiedlichen Stellungen zum Arretieren der Kupplungseinrichtung 5 in der Schieneneinrichtung 4 durch Drehung der Schieneneinrichtung 4 relativ zur Kupplungseinrichtung 5 um einen bestimmten Drehwinkel erfolgt und die genannte Drehung um eine gedachte Achse erfolgt, die sowohl durch die Vorderseite 2 als auch durch die Rückseite 3 als auch durch die Schieneneinrichtung 4 als auch durch die Kupplungseinrichtung 5 verläuft und orthogonal zur Schieneneinrichtung 4 ausgerichtet ist. Der genannte Drehwinkel kann bei manchen Ausführungsbeispielen beispielsweise 90° oder 180° betragen. Bei besonders bevorzugten Ausführungsbeispielen sind die Schieneneinrichtung 4 und die Kupplungseinrichtung 5 sogar so eingerichtet und aufeinander abgestimmt, dass die Kupplungseinrichtung 5 in jeder beliebigen Drehposition bezogen auf eine Drehung der Schieneneinrichtung 4 relativ zur Kupplungseinrichtung 5 um die genannte gedachte Achse herum in der Schieneneinrichtung 4 arretierbar ist.

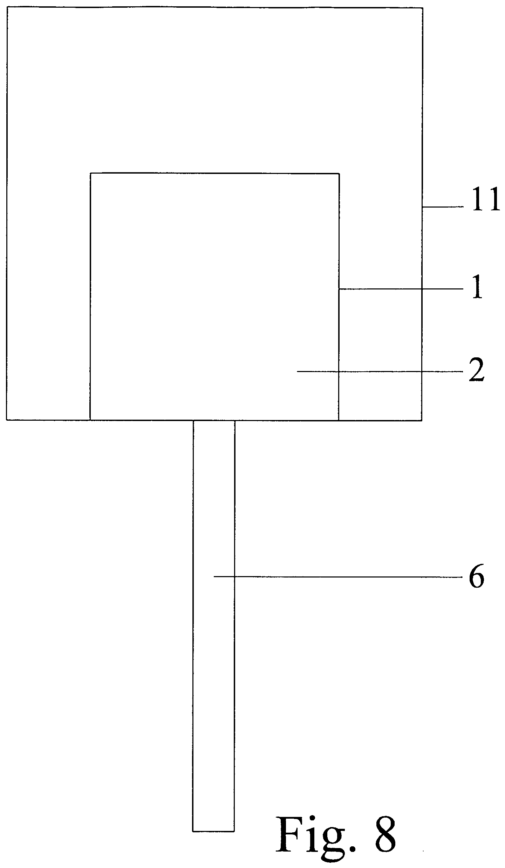

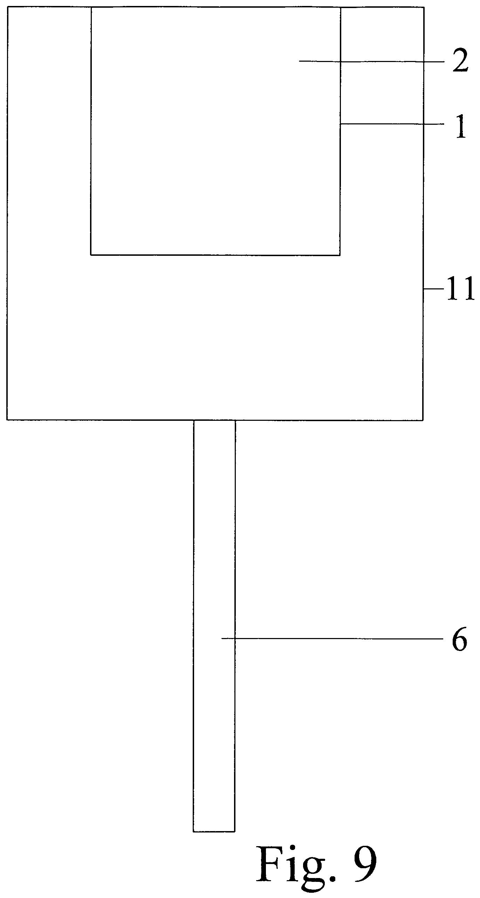

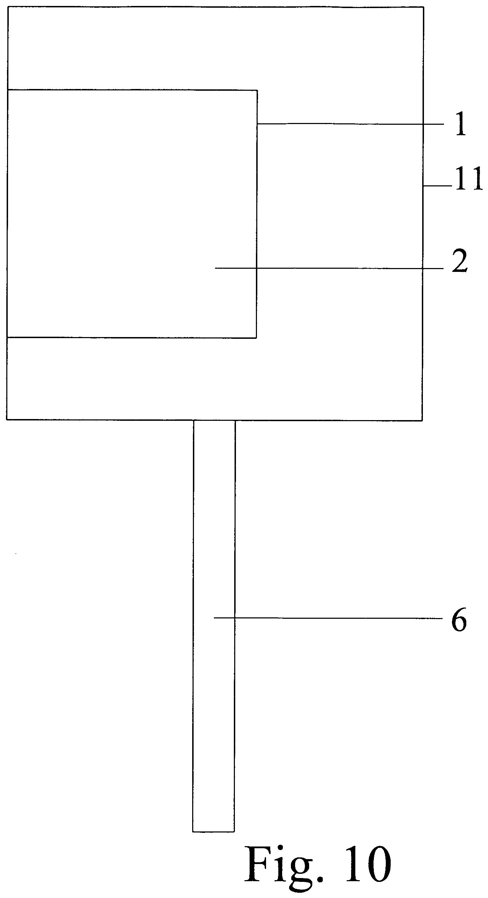

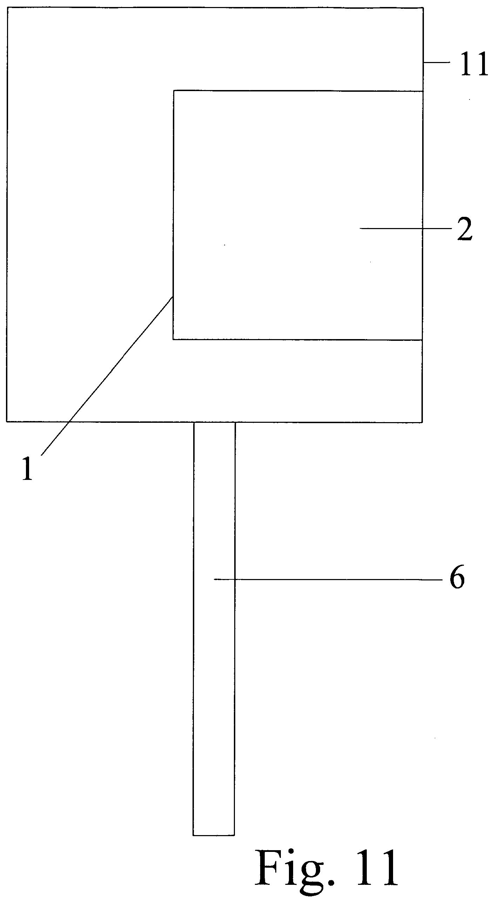

Bei dem in den Fig. 5 bis 7 dargestellten Ausführungsbeispiel der erfindungsgemäßen Abschirmflaggeneinrichtung bzw. der erfindungsgemäßen Kombinationsvorrichtung (vgl. hierzu zusätzlich auch die Fig. 2 und 4) weist die Schieneneinrichtung 4 in ihrer Längsrichtung gesehen ein erstes Ende 8 und ein zweites Ende 9 auf, und die Kupplungseinrichtung 5 ist zwischen dem ersten Ende 8 der Schieneneinrichtung 4 und dem zweiten Ende 9 der Schieneneinrichtung 4 in der Schieneneinrichtung 4 frei verschiebbar und dabei in jeder beliebigen Verschiebeposition in der Schieneneinrichtung 4 arretierbar. Bei feststehender Stativeinrichtung 6, 7 erfolgt diese Verschiebung natürlich als Relativbewegung zwischen der Schieneneinrichtung 4 und der Kupplungseinrichtung 5, wobei die Kupplungseinrichtung 5 ihre absolute Lage im Raum nicht verändert, sondern nur die Schieneneinrichtung 4 - und mit ihr das an ihr befestigte flächenhaft ausgeführte Gebilde 1 der Reflektoreinrichtung - hin und her geschoben wird. Dementsprechend ändert sich bei feststehender Stativeinrichtung 6, 7 auch nicht die absolute Lage der Abschirmflagge 11 im Raum - jedenfalls solange nicht, wie nicht die absolute Lage der Kupplungseinrichtung 5 im Raum durch Erhöhen, Absenken oder Drehen der Stativeinrichtung 6, 7 verändert wird. Wohl aber ändert sich die relative Lage des flächenhaft ausgeführten Gebildes 1 der Reflektoreinrichtung einerseits und der Abschirmflagge 11 andererseits zueinander, wenn die Schieneneinrichtung 4 so wie vorstehend beschrieben hin und her geschoben wird. Berücksichtigt man ferner die auch bereits weiter oben schon beschriebene Möglichkeit der Drehung der Schieneneinrichtung 4, so können mit dem hier näher beschriebenen Ausführungsbeispiel der erfindungsgemäßen Kombinationsvorrichtung beispielsweise auch die in den Fig. 8 bis 11 rein schematisch dargestellten Relativpositionen zwischen einerseits der Vorderseite 2 der Reflektoreinrichtung und andererseits der Abschirmflagge 11 eingestellt werden. Nimmt man nun beispielsweise zwei oder vier derartige Kombinationsvorrichtungen her, dann kann man die lichtreflektierende Fläche sehr einfach vergrößern, dabei die die lichtreflektierende Fläche umgebenden Abschirmflaggen beibehalten und so gegenüber dem Stand der Technik bei entsprechenden Auf- und Umbauten erheblich Arbeitszeit und darüber hinaus auch Materialbevorratung einsparen. Stellt man die jeweiligen Stativeinrichtungen 6, 7 jeweils auf die passenden Höhen 6 und Längen 7 ein, so kann man beim Hintereinanderstellen der Kombinationsvorrichtungen in den Einstellungen von Fig. 8 und 9 eine vertikal verlängerte lichtreflektierende Vorderseite 2 und beim Nebeneinanderstellen der Kombinationsvorrichtungen in den Einstellungen von Fig. 10 und 11 eine horizontal verlängerte lichtreflektierende Vorderseite 2 samt der dafür notwendigen Abschirmung erzielen. Kombiniert man bei jeweils geeigneter Höhen- und Längeneinstellung der jeweiligen Stativeinrichtungen 6, 7 die Einstellungen der Fig. 8, 9 und zweimal 10 (oder zweimal 11) miteinander und lässt dabei die jeweiligen Abschirmflaggen 11 sich geeignet überlappen, erhält man sogar eine vierfach vergrößerte lichtreflektierende Vorderseite 2 samt der dafür notwendigen Abschirmung - und dies alles mit weitaus geringerem Arbeitsaufwand, als er bei einem solchen Zusammenstellen von Reflektoreinrichtungen und Abschirmflaggen nach dem Stand der Technik erforderlich ist.

Ganz generell weist eine erfindungsgemäße Kombinationsvorrichtung ein beliebiges Ausführungsbeispiel einer erfindungsgemäßen Abschirmflaggeneinrichtung in Kombination mit einer Reflektoreinrichtung auf, wobei die Reflektoreinrichtung das flächenhaft ausgeführte Gebilde 1 mit der Vorderseite 2 und der Rückseite 3 ist, die Vorderseite 2 lichtreflektierend ausgebildet ist und die Rückseite 3 mit der Schieneneinrichtung 4 versehen ist, welche so eingerichtet ist, dass in sie die ferner vorgesehene und an die Schieneneinrichtung 4 angepasste Kupplungseinrichtung 5 derart arretierbar eingreifen kann, dass eine Lage der Schieneneinrichtung 4 relativ zur Kupplungseinrichtung 5 in Längsrichtung der Schieneneinrichtung 4 einstellbar veränderbar ist und die Kupplungseinrichtung 5 in mehreren unterschiedlichen Positionen bezogen auf die Längsrichtung der Schieneneinrichtung 4 in der Schieneneinrichtung 4 arretierbar ist. Die Kupplungseinrichtung 5 ist zur lösbaren Befestigung des mit der Schieneneinrichtung 4 versehenen flächenhaft ausgeführten Gebildes 1 an einer Stativeinrichtung 6, 7 und/oder an einer Aufhängungseinrichtung vorgesehen und entsprechend ausgebildet.

Bei dem in den Fig. 5 bis 7 gezeigten und im Grunde genommen auch schon weiter oben ausführlicher erläuterten Ausführungsbeispiel der erfindungsgemäßen Kombinationsvorrichtung ist die Abschirmflagge 11 so gestaltet und auf das flächenhaft ausgeführte Gebilde 1 abgestimmt, dass es mindestens eine erste Arretierstellung der Kupplungseinrichtung 5 in der Schieneneinrichtung 4 gibt derart, dass in dieser ersten Arretierstellung der Kupplungseinrichtung 5 in der Schieneneinrichtung 4 bei Betrachtung der Kombination der Abschirmflaggeneinrichtung und der Reflektoreinrichtung von der Vorderseite 2 her die Abschirmflagge 11 an jeder Stelle eines gesamten Randes des flächenhaft ausgeführten Gebildes 1 über den Rand des flächenhaft ausgeführten Gebildes 1 hinausragt und somit die Vorderseite 2 vollständig von der Abschirmflagge 11 umrahmt ist, wenn sich die Kupplungseinrichtung 5 in der genannten ersten Arretierstellung in der Schieneneinrichtung 4 befindet. Eine solche Stellung ist, wie auch schon bereits weiter oben ausführlich erläutert, in Fig. 7 gezeigt.

An dieser Stelle sei angemerkt, dass die Abschirmflagge 11 beliebig geformt sein kann. Es gibt daher etwa solche Ausführungsbeispiele der erfindungsgemäßen Abschirmflaggeneinrichtung und der erfindungsgemäßen Kombinationsvorrichtung, bei denen die Abschirmflagge 11, so wie in den Fig. 5 bis 11 dargestellt, rechteckig ist. Bei anderen Ausführungsbeispielen hat die Abschirmflagge eine runde Form. Damit kann insofern gegenüber der rechteckigen Form Material und Platz eingespart werden, als ein auf die Kombinationsvorrichtung gerichteter Lichtkegel eines Scheinwerfers gewöhnlich eine runde Frontfläche hat und daher Eckbereiche einer rechteckigen Abschirmflagge 11 oft gar nicht vom Licht getroffen werden. Allerdings gibt es auch Ausführungsbeispiele der erfindungsgemäßen Abschirmflaggeneinrichtung und der erfindungsgemäßen Kombinationsvorrichtung, bei denen die Abschirmflagge eine Form hat, die weder rechteckig noch rund ist. Letztlich hängt die gewählte Form der Abschirmflagge 11 häufig auch ab von der Form des flächenhaft ausgeführten Gebildes 1 der konkreten Reflektoreinrichtung, für das Zusammenwirken mit der die jeweilige konkrete Abschirmflagge 11 bestimmt ist. Zwar ist bei den in den Fig. 5 bis 11 dargestellten Ausführungsbeispielen der erfindungsgemäßen Kombinationsvorrichtung das flächenhaft ausgeführte Gebilde 1 der Reflektoreinrichtung rechteckig, ja sogar quadratisch, jedoch gibt es andere Ausführungsbeispiele erfindungsgemäßer Kombinationsvorrichtungen, bei denen das flächenhaft ausgeführte Gebilde 1 der Reflektoreinrichtung rund ist oder eine Form hat, die weder rechteckig noch rund ist.

Für das in den Fig. 5 bis 11, insbesondere in den Fig. 8 bis 11, gezeigte besondere Ausführungsbeispiel der erfindungsgemäßen Kombinationsvorrichtung gilt über das bereits oben dazu speziell Gesagte (vgl. insbesondere Fig. 7) hinaus ferner folgendes: Sowohl die Reflektoreinrichtung, d.h. deren flächenhaft ausgeführtes Gebilde 1, als auch die Abschirmflagge 11 sind rechteckig. Das flächenhaft ausgeführte Gebilde 1, die Abschirmflagge 11, die Schieneneinrichtung 4 und die Kupplungseinrichtung 5 sind derart eingerichtet und aufeinander abgestimmt, dass es eine zweite Arretierstellung der Kupplungseinrichtung 5 in der Schieneneinrichtung 4 gibt derart, dass in dieser zweiten Arretierstellung der Kupplungseinrichtung 5 in der Schieneneinrichtung 4 bei Betrachtung der Kombination der Abschirmflaggeneinrichtung und der Reflektoreinrichtung von der Vorderseite 2 her die Abschirmflagge 11 an drei Kanten des flächenhaft ausgeführten Gebildes 1 an jeder Stelle des dortigen Randes des flächenhaft ausgeführten Gebildes 1 über den dortigen Rand des flächenhaft ausgeführten Gebildes 1 hinausragt und an einer Kante des flächenhaft ausgeführten Gebildes 1 an keiner Stelle des dortigen Randes des flächenhaft ausgeführten Gebildes 1 über den dortigen Rand des flächenhaft ausgeführten Gebildes 1 hinausragt. Ferner sind das flächenhaft ausgeführte Gebilde 1, die Abschirmflagge 11, die Schieneneinrichtung 4 und die Kupplungseinrichtung 5 derart eingerichtet und aufeinander abgestimmt, dass es eine dritte Arretierstellung der Kupplungseinrichtung 5 in der Schieneneinrichtung 4 gibt derart, dass in dieser dritten Arretierstellung der Kupplungseinrichtung 5 in der Schieneneinrichtung 4 bei Betrachtung der Kombination der Abschirmflaggeneinrichtung und der Reflektoreinrichtung von der Vorderseite 2 her die Abschirmflagge 11 an drei Kanten des flächenhaft ausgeführten Gebildes 1 an jeder Stelle des dortigen Randes des flächenhaft ausgeführten Gebildes 1 über den dortigen Rand des flächenhaft ausgeführten Gebildes 1 hinausragt und an einer Kante des flächenhaft ausgeführten Gebildes 1 an keiner Stelle des dortigen Randes des flächenhaft ausgeführten Gebildes 1 über den dortigen Rand des flächenhaft ausgeführten Gebildes 1 hinausragt, wobei die Kante des flächenhaft ausgeführten Gebildes 1, an der die Abschirmflagge 11 in der dritten Arretierstellung der Kupplungseinrichtung 5 in der Schieneneinrichtung 4 nicht über den Rand des flächenhaft ausgeführten Gebildes 1 hinausragt, derjenigen Kante des flächenhaft ausgeführten Gebildes 1 gegenüberliegt, an der die Abschirmflagge 11 in der zweiten Arretierstellung der Kupplungseinrichtung 5 in der Schieneneinrichtung 4 nicht über den Rand des flächenhaft ausgeführten Gebildes 1 hinausragt. Schließlich sind außerdem die Schieneneinrichtung 4 und die Kupplungseinrichtung 5 so eingerichtet und aufeinander abgestimmt, dass es bei festgehaltener Position zum Arretieren der Kupplungseinrichtung 5 in Bezug auf die Längsrichtung der Schieneneinrichtung 4 mindestens zwei radial unterschiedliche Stellungen zum Arretieren der Kupplungseinrichtung 5 in der Schieneneinrichtung 4 gibt, wobei ein Übergang zwischen diesen beiden eben genannten radial unterschiedlichen Stellungen zum Arretieren der Kupplungseinrichtung 5 in der Schieneneinrichtung 4 durch Drehung der Schieneneinrichtung 4 relativ zur Kupplungseinrichtung 5 um einen bestimmten Drehwinkel erfolgt und die genannte Drehung um eine gedachte Achse erfolgt, die sowohl durch die Vorderseite 2 als auch durch die Rückseite 3 als auch durch die Schieneneinrichtung 4 als auch durch die Kupplungseinrichtung 5 verläuft und orthogonal zur Schieneneinrichtung 4 ausgerichtet ist. Der eben genannte Drehwinkel kann bei dem in den Fig. 5 bis 11 dargestellten Ausführungsbeispiel der erfindungsgemäßen Kombinationsvorrichtung 90° oder 180° betragen. Mehr noch: Das in den Fig. 5 bis 11 dargestellte Ausführungsbeispiel der erfindungsgemäßen Kombinationsvorrichtung ist sogar so ausgelegt, dass die Schieneneinrichtung 4 und die Kupplungseinrichtung 5 so eingerichtet und aufeinander abgestimmt sind, dass die Kupplungseinrichtung 5 in jeder beliebigen Drehposition bezogen auf eine Drehung der Schieneneinrichtung 4 relativ zur Kupplungseinrichtung 5 um die genannte gedachte Achse herum in der Schieneneinrichtung 4 arretierbar ist.

Die Abschirmflagge 11 besteht bei den meisten Ausführungsbeispielen der erfindungsgemäßen Abschirmflaggeneinrichtung und der erfindungsgemäßen Kombinationsvorrichtung aus textilem Material und/oder aus Kunststoffmaterial und ist ganz bevorzugterweise lichtundurchlässig ausgeführt. Sehr häufig ist die Abschirmflagge 11 schwarz, jedoch gibt es auch solche Ausführungsbeispiele der erfindungsgemäßen Abschirmflaggeneinrichtung und der erfindungsgemäßen Kombinationsvorrichtung, bei denen die Abschirmflagge 11 nicht schwarz ist. In solchen Ausführungsfällen wird die Abschirmflagge 11 bevorzugt so gestaltet, dass sie zwar lichtreflektierend ist, ihr Lichtreflexionsvermögen jedoch geringer ist als das Lichtreflexionsvermögen der genannten Vorderseite 2 der Reflektoreinrichtung. Auf diese Weise kann man - vgl. beispielsweise Fig. 7 - einen "harten" Reflektor (die "hart" reflektierende Vorderseite 2) einsetzen im Zentrum einer großen, "weich" reflektierenden und allgemein breit streuenden Fläche (Abschirmflagge 11) und dabei mit der erfindungsgemäßen Abschirmflaggeneinrichtung und mit der erfindungsgemäßen Kombinationsvorrichtung auf material- und insbesondere arbeitssparende Weise den gleichen optischen Effekt erreichen wie mit diesbezüglich ausgerichteten Aufbauten aus dem Stand der Technik, die aber weit mehr Stative benötigen und daher beim Auf- und Umbau auch deutlich arbeitsintensiver sind als die erfindungsgemäße Lösung.

Manche Ausführungsbeispiele der erfindungsgemäßen Abschirmflaggeneinrichtung und der erfindungsgemäßen Kombinationsvorrichtung sind derart ausgebildet, dass die Abschirmflagge 11 auswechselbar ist. Man kann hier also beispielsweise Abschirmflaggen unterschiedlicher Größen und Formen wahlweise und abwechselnd verwenden oder auch eine beispielsweise schwarze Abschirmflagge 11 bei Bedarf beliebig durch eine weiße oder durch eine graue oder durch eine goldgetönte oder durch eine golden und silbrig gemusterte bzw. durchwirkte, d.h. mit einer sogenannten "Soft-Gold-Oberfläche" versehene, Abschirmflagge 11 ersetzen. Dies erhöht die Einsatzflexibilität und Einsatzmöglichkeiten der erfindungsgemäßen Abschirmflaggeneinrichtung und der erfindungsgemäßen Kombinationsvorrichtung.

Wie bereits oben ausgeführt wurde, dient bei jeder erfindungsgemäßen Abschirmflaggeneinrichtung und damit dementsprechend auch bei jeder erfindungsgemäßen Kombinationsvorrichtung die Kupplungseinrichtung 5 als Basis der um sie herum aufgespannten Abschirmflagge 11. Bevorzugterweise wird das verwirklicht, indem die Abschirmflagge 11 mittels mindestens eines in der Kupplungseinrichtung 5 steckenden Stabes 12, 13, 14, 15 an der Kupplungseinrichtung 5 befestigt ist. Vorzugsweise werden dafür sogar mehrere in der Kupplungseinrichtung 5 steckende Stäbe 12, 13, 14, 15 verwendet. Der genannte Stab 12, 13, 14, 15 bzw. die genannten Stäbe 12, 13, 14, 15 können beispielsweise jeweils in Form einer Stange oder einer Speiche, also als runder Stab 12, 13, 14, 15 oder Speiche bzw. runde Stäbe 12, 13, 14, 15 oder Speichen, oder auch als abgeplatteter Stab 12, 13, 14, 15 bzw. abgeplattete Stäbe 12, 13, 14, 15 ausgeführt sein.

Bei dem in den Fig. 5 bis 11 gezeigten Ausführungsbeispiel der erfindungsgemäßen Abschirmflaggeneinrichtung bzw. der erfindungsgemäßen Kombinationsvorrichtung ist die Abschirmflagge 11 mittels vierer in der Kupplungseinrichtung 5 steckenden Stäbe 12, 13, 14, 15 an der Kupplungseinrichtung 5 befestigt. Die Fig. 5 zeigt genau diesen Aufbau, allerdings nur rein schematisch und nicht maßstabsgerecht. Jeder einzelne der eben genannten Stäbe 12, 13, 14, 15 steckt mit einem Ende in einem in der Kupplungseinrichtung 5 jeweils für ihn vorgesehenen Loch. Darüber hinaus ist - und dies ist in der Darstellung von Fig. 5 aus Übersichtlichkeitsgründen nicht eingezeichnet - auf der von der Rückseite 3 der Reflektoreinrichtung abgewandten Seite der Abschirmflagge 11 - also auf der Seite der Abschirmflagge 11, die dem Betrachter der Fig. 5 zugewandt ist - für jeden einzelnen der in der Kupplungseinrichtung 5 steckenden Stäbe 12, 13, 14, 15 jeweils eine Tasche zur Aufnahme des jeweils von der Kupplungseinrichtung 5 abgewandten Endes des jeweiligen Stabes 12, 13, 14, 15 vorgesehen. Dabei ist jede einzelne der eben genannten und in Fig. 5 der Übersichtlichkeit halber nicht gezeigten Taschen jeweils an ihrem von der Kupplungseinrichtung 5 abgewandten Ende mit jeweils einem Klettverschluss versehen, welcher derart ausgeführt ist, dass er bei in die jeweilige Tasche eingelegtem Stab 12, 13, 14, 15 derart zusammengeklappt und dabei fest verschlossen werden kann, dass der jeweilige Stab 12, 13, 14, 15 bei so verschlossenem Klettverschluss longitudinal unter Druck gesetzt ist. Derartiges ist besonders vorteilhaft, wenn als Abschirmflagge 11 nicht einfach eine schwarze Abschirmflagge 11, sondern eine wie oben beschriebene "weich" lichtreflektierende Abschirmflagge 11 zum Einsatz kommt. Hier ist es zum Erzielen definierter Lichtreflexion sehr häufig erwünscht, dass eine solche Abschirmflagge 11 dauerhaft straff gespannt ist und eine möglichst dauerhaft ebene Reflexionsfläche bietet. Das kann mittels der soeben beschriebenen Stab-Klettverschluss-Kombination sehr einfach und ohne großen Arbeitsaufwand erreicht werden, und zwar nicht nur für kleine Abschirmflaggen 11, sondern auch für sehr große Abschirmflaggen 11 mit Durchmessern von weit über einem Meter.

Schließlich gibt es als weitere Ausführungsbeispiele noch solche Ausführungsbeispiele der erfindungsgemäßen Abschirmflaggeneinrichtung und der erfindungsgemäßen Kombinationsvorrichtung, bei denen die Abschirmflaggeneinrichtung so eingerichtet und ausgebildet ist, dass mindestens ein Abschirmflaggenzusatz vorgesehen ist, der sich in seinen Lichtreflexions- und Lichtabsorptionseigenschaften von der Abschirmflagge 11 unterscheidet und abnehmbar über die Abschirmflagge 11 gezogen werden kann. Dies steigert die Einsatzmöglichkeiten der erfindungsgemäßen Abschirmflaggeneinrichtung und der erfindungsgemäßen Kombinationsvorrichtung noch weiter.

Der im vorangegangenen Absatz genannte Abschirmflaggenzusatz kann beispielsweise bei einigen Ausführungsbeispielen der erfindungsgemäßen Abschirmflaggeneinrichtung und der erfindungsgemäßen Kombinationsvorrichtung so ausgeführt sein, dass er in seinem über die Abschirmflagge 11 gezogenen Zustand diejenige Fläche der Abschirmflagge 11, welche in die gleiche Richtung wie die Vorderseite 2 der Reflektoreinrichtung weist, vollständig bedeckt. Der Abschirmflaggenzusatz kann ferner beispielsweise auch so eingerichtet sein, dass er mittels eines Reißverschlusses auf der Abschirmflagge 11 befestigt werden kann.

Bevorzugterweise ist der Abschirmflaggenzusatz - sofern vorhanden - so eingerichtet, dass auf seiner von der Rückseite 3 der Reflektoreinrichtung abgewandten Seite eine Öffnung oder zumindest ein Schlitz vorgesehen ist, durch die bzw. durch den hindurch es einem Benutzer auch bei auf die Abschirmflagge 11 aufgezogenem Abschirmflaggenzusatz weiterhin möglich ist, zur Veränderung der Lage der Schieneneinrichtung 4 relativ zur Kupplungseinrichtung 5 sowie zur Veränderung der radialen Stellung der Schieneneinrichtung 4 notwendige Handgriffe vorzunehmen.

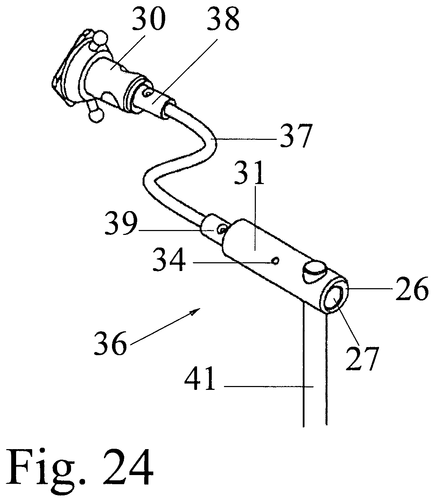

Zusammenfassend kann an dieser Stelle betreffend die erfindungsgemäße Abschirmflaggeneinrichtung zur Kombination mit einer Reflektoreinrichtung ganz allgemein festgehalten werden, dass die Reflektoreinrichtung ein flächenhaft ausgeführtes Gebilde 1 mit einer Vorderseite 2 und einer Rückseite 3 ist, die Vorderseite 2 lichtreflektierend ausgebildet ist und die Rückseite 3 mit einer Schieneneinrichtung 4 versehen ist, welche so eingerichtet ist, dass in sie eine ferner vorgesehene und an die Schieneneinrichtung 4 angepasste Kupplungseinrichtung 5, 36 (vgl. in diesem Zusammenhang ergänzend zu den Fig. 2 bis 6 auch die Fig. 24 und die textlichen Ausführungen dazu weiter unten) derart arretierbar eingreifen kann, dass eine Lage der Schieneneinrichtung 4 relativ zur Kupplungseinrichtung 5, 36 in Längsrichtung der Schieneneinrichtung 4 einstellbar veränderbar ist und die Kupplungseinrichtung 5, 36 in mehreren unterschiedlichen Positionen bezogen auf die Längsrichtung der Schieneneinrichtung 4 in der Schieneneinrichtung 4 arretierbar ist, und wobei die Kupplungseinrichtung 5, 36 zur lösbaren Befestigung des mit der Schieneneinrichtung 4 versehenen flächenhaft ausgeführten Gebildes 1 an einer Stativeinrichtung 6, 7, 41 und/oder an einer Aufhängungseinrichtung vorgesehen und entsprechend ausgebildet ist. Die Kupplungseinrichtung 5, 36 ist dabei stets derart eingerichtet, dass sie als Basis einer um sie herum aufgespannten Abschirmflagge 11 dient.

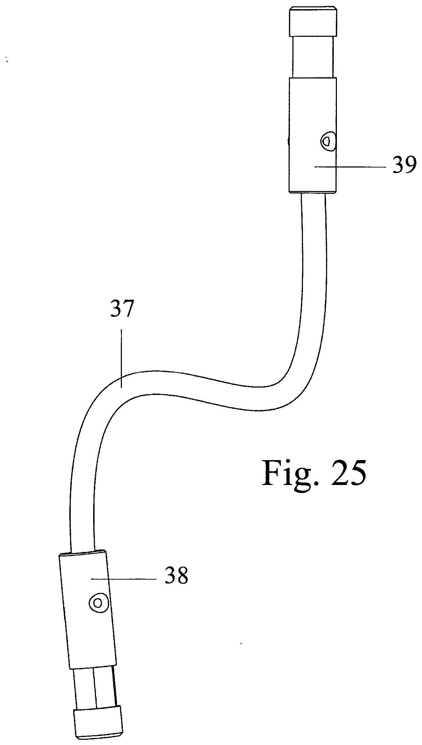

Ganz besonders vorteilhaft sind dabei solche Ausführungsbeispiele einer erfindungsgemäßen Abschirmflaggeneinrichtung, bei denen die Kupplungseinrichtung 36 (vgl. Fig. 24) so ausgebildet ist, dass sie es ermöglicht, das flächenhaft ausgeführte Gebilde 1 sowohl parallel zu einer Ebene, in welcher die Abschirmflagge 11 aufgespannt ist, als auch in verschiedenen Richtungen und Winkeln gekippt zu der Ebene, in welcher die Abschirmflagge 11 aufgespannt ist, einzustellen. Die Fig. 24 zeigt ein besonderes Ausführungsbeispiel einer solchen Kupplungseinrichtung 36, bei welchem die Kupplungseinrichtung 36 so eingerichtet ist, dass sie einen länglichen biegsamen Abschnitt 37 aufweist, welcher so ausgebildet ist, dass er zwar mit manuellem Kraftaufwand gebogen werden kann, aber in seiner im Ergebnis dieses Biegens erlangten Form verbleibt, solange er nicht durch erneuten Kraftaufwand in eine andere Form gebogen wird, und dass mittels des Biegens des genannten länglichen biegsamen Abschnitts 37 verschiedene Ausrichtungen des flächenhaft ausgeführten Gebildes 1 im Raum eingestellt werden können, ohne dass dabei die Lage der Abschirmflagge 11 im Raum geändert wird. Der genannte längliche biegsame Abschnitt 37 kann dabei zum Beispiel, wie es in Fig. 25 gezeigt ist, ein an seinen beiden Enden mit jeweils einem Zapfen 38, 39 versehenes längliches Metallstück aus einer speziellen, Aluminium enthaltenden Metalllegierung sein, wie es als solches bereits aus dem Stand der Technik bekannt und beispielsweise auch auf S. 45 der Broschüre dedolight Lightstream, English, 04/19 der Dedo Weigert Film GmbH, München, 2019 beschrieben und zu sehen ist. Ein solches Metallstück kann manuell in alle möglichen Richtungen verbogen werden, ist dabei aber in jeder ihm gegebenen Biegerichtung in der Lage, das flächenhaft ausgeführte Gebilde 1, d.h. also die Reflektoreinrichtung, jeweils stabil zu tragen, ohne dass eine Lageänderung allein aufgrund der Einwirkung der Schwerkraft geschieht. Das genannte, in der Fig. 25 gezeigte und auch in den Darstellungen der Fig. 24, 26 und 31 wiederzufindende Metallstück, d.h. der längliche biegsame Abschnitt 37 samt den beiden Zapfen 38, 39, kann in verschiedenen Ausführungsbeispielen unterschiedlich lang sein, beispielsweise - und diese jetzt angeführten konkreten Längen seien hier nur stellvertretend für viele weitere mögliche Längenbeispiele genannt - bei vollständiger Ausstreckung 29 cm lang oder 40 cm lang.

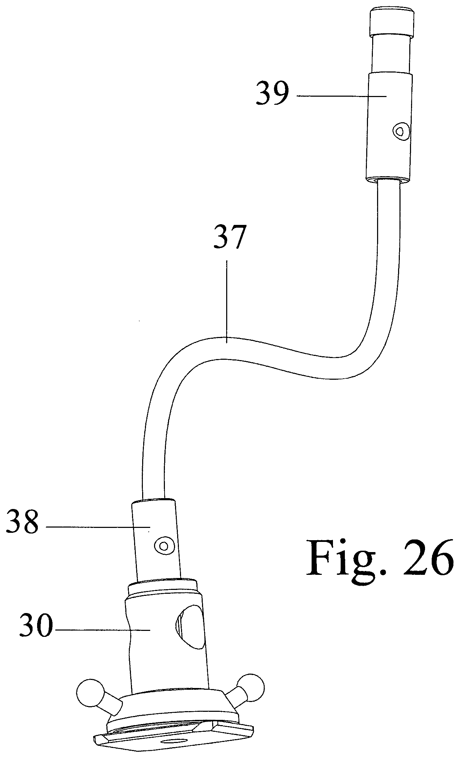

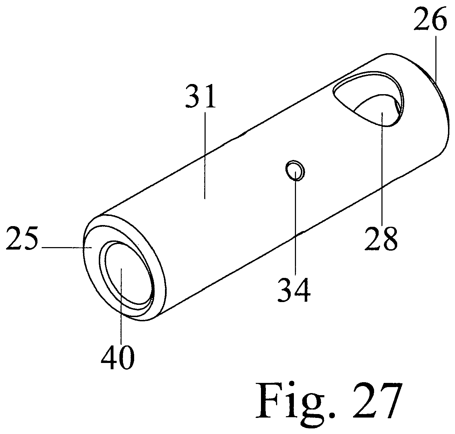

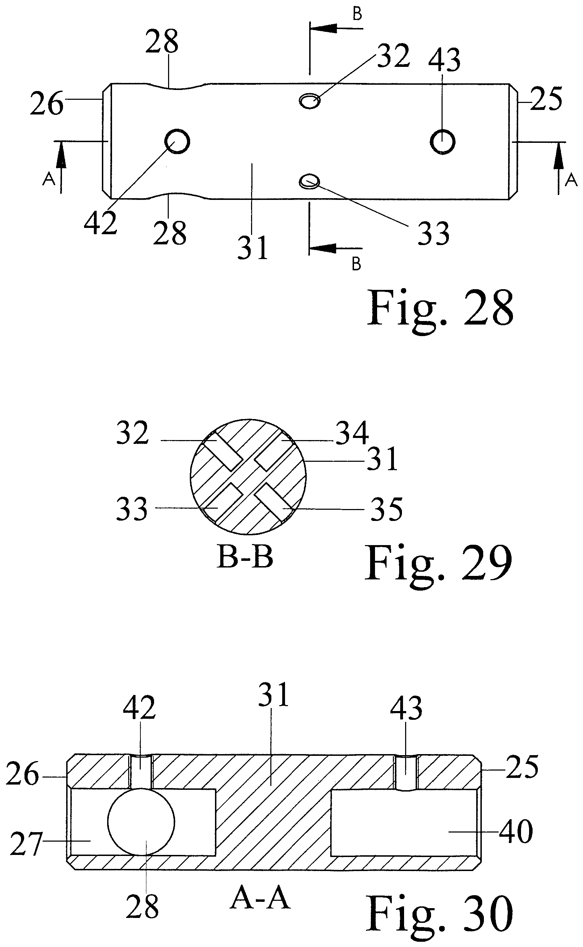

In der eben bereits am Rande erwähnten Fig. 26 ist der längliche biegsame Abschnitt 37 der Kupplungseinrichtung 36 zu sehen ergänzt um eine Arretiereinrichtung 30, welche auf einen seiner beiden Zapfen, hier auf den in der Darstellung von Fig. 26 nach unten weisenden Zapfen 38, aufgesteckt ist und zum Arretieren der Kupplungseinrichtung 36 in der Schieneneinrichtung 4 der Reflektoreinrichtung dient. Vergleicht man Fig. 26 mit Fig. 24, so erkennt man, dass auf dem der Arretiereinrichtung 30 gegenüberliegenden Ende des länglichen biegsamen Abschnitts 37 auf dem dortigen anderen seiner beiden Zapfen, also dem in der Darstellung von Fig. 24 nach rechts unten weisenden Zapfen 39, ein besonderer Stativadapter sitzt. Dieser ist ein spezielles Ausführungsbeispiel eines erfindungsgemäßen Stativadapters und wird weiter unten anhand der Fig. 27 bis 30 noch näher erläutert. Der genannte besondere Stativadapter wiederum sitzt bei der in Fig. 24 zu sehenden Darstellung auf einer Stativstange 41. Außer der in Fig. 24 zu sehenden kleinen Sacklochöffnung 34 weist dieser genannte besondere Stativadapter drei weitere entsprechende kleine Sacklochöffnungen 32, 33, 35 (vgl. Fig. 28 und 29) auf. Die vier eben genannten kleinen Sacklochöffnungen 32, 33, 34, 35 (weiter unten im Text sowie in den Patentansprüchen als "weitere Sacklochöffnungen" 32, 33, 34, 35 bezeichnet) sind in Umfangsrichtung des in Fig. 24 zu sehenden zylinderförmigen Abschnitts 31 um jeweils 90° voneinander versetzt in dem genannten zylinderförmigen Abschnitt 31 angeordnet (vgl. auch die Fig. 28 und 29) und dienen zum Einstecken von vier Stäben, die, ganz genau so wie die bereits weiter oben unter Bezugnahme auf die Fig. 5 beschriebenen vier Stäbe 12, 13, 14, 15, als Spannstäbe zum Befestigen der Abschirmflagge 11 an der Kupplungseinrichtung 36 dienen. Der Übersichtlichkeit halber sind diese Stäbe 12, 13, 14, 15 in der Darstellung der Fig. 24 weggelassen worden. Letzteres gilt auch für die Darstellungen der Fig. 27 bis 29.

Wenden wir uns nun der Beschreibung einiger Ausführungsbeispiele erfindungsgemäßer Stativadapter zu. Hauptzweck eines erfindungsgemäßen Stativadapters ist es, entweder als die Kupplungseinrichtung 5 oder als Bestandteil der Kupplungseinrichtung 36 in der erfindungsgemäßen Abschirmflaggeneinrichtung bzw. in der erfindungsgemäßen Kombinationsvorrichtung verwendet zu werden.

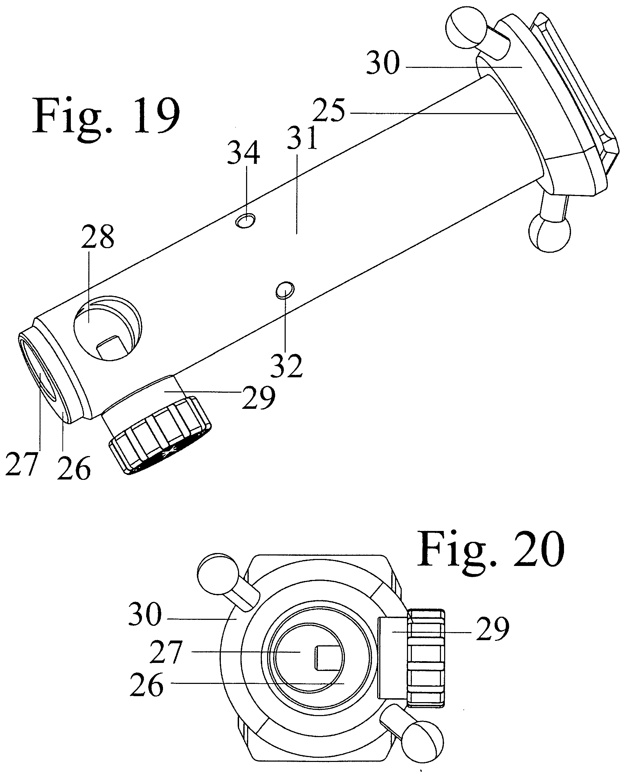

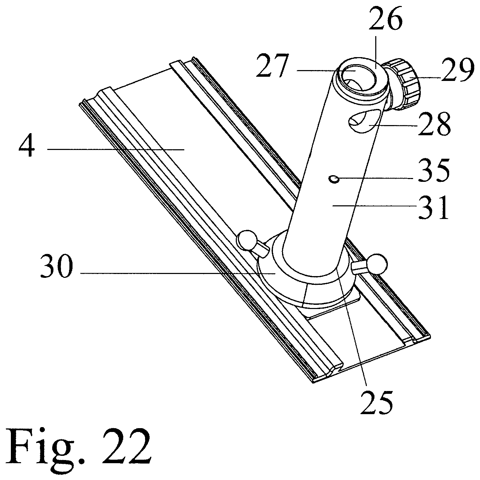

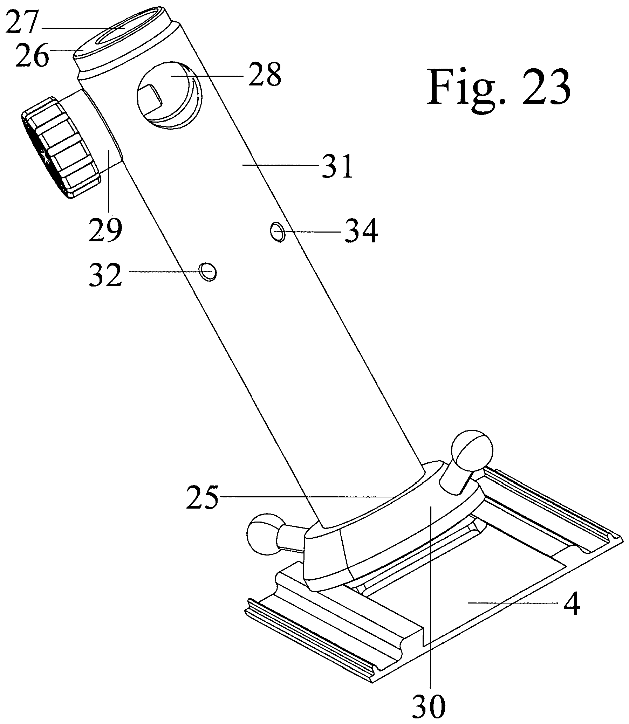

Unter Bezugnahme auf die Fig. 13 bis 23 werden nun zunächst einmal solche Ausführungsbeispiele eines erfindungsgemäßen Stativadapters beschrieben, deren Hauptzweck, wie bereits weiter oben ausgeführt wurde, darin besteht, als die Kupplungseinrichtung 5 in der erfindungsgemäßen Abschirmflaggeneinrichtung bzw. in der erfindungsgemäßen Kombinationsvorrichtung verwendet zu werden. In den Fig. 13 bis 23 sind konstruktiv gleiche Teile bzw. konstruktiv gleiche Abschnitte der jeweils dargestellten Stativadapter mit gleichen Bezugszeichen versehen. Vorausgeschickt sei bereits an dieser Stelle, dass dies auch für die Fig. 27 bis 30 sowie 24 gilt, in denen ein etwas anderes Ausführungsbeispiel eines erfindungsgemäßen Stativadapters allein bzw. als Bestandteil eines speziellen Ausführungsbeispiels einer erfindungsgemäßen Kupplungseinrichtung 36 zu sehen ist.

Eine in den Fig. 21 bis 23 zu sehende Schieneneinrichtung, in welche der jeweilige Stativadapter dort jeweils eingekuppelt ist, ist in den Darstellungen der Fig. 21 bis 23 jeweils konstruktiv gleich und daher in jeder dieser drei eben genannten Figuren jeweils mit dem Bezugszeichen 4 versehen, genau wie es bereits in den Fig. 2, 3, 4 und 6 für die Schieneneinrichtung verwendet wurde. In der Tat ist diese Schieneneinrichtung 4 in all den sowohl oben beschriebenen als auch im folgenden noch beschrieben werdenden Ausführungsbeispielen stets in gleicher Weise gestaltet, und die im folgenden beschriebenen Ausführungsbeispiele des erfindungsgemäßen Stativadapters sind spezielle Ausführungsbeispiele der bereits weiter oben mehrfach in allgemeiner Weise erwähnten Kupplungseinrichtung 5, welche einen wesentlichen Bestandteil der erfindungsgemäßen Abschirmflaggeneinrichtung bzw. der erfindungsgemäßen Kombinationsvorrichtung darstellt.

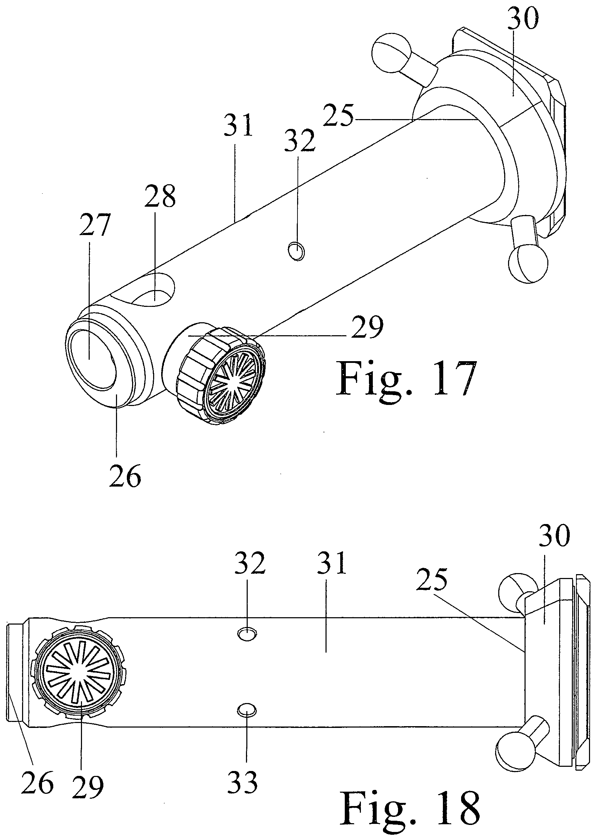

Ein Vergleich der Fig. 13 bis 16 und 21, in welchen rein schematisch ein aus dem Stand der Technik unter der Handelsbezeichnung "DLR-LOCK" bekannter Stativadapter zu sehen ist, mit den Fig. 17 bis 20, 22 und 23, in welchen rein schematisch ein Ausführungsbeispiel eines erfindungsgemäßen Stativadapters zu sehen ist, macht den Kern der vorliegenden Erfindung betreffend den Stativadapter sofort deutlich: Gegenüber dem aus dem Stand der Technik unter der Handelsbezeichnung "DLR-LOCK" bekannten Stativadapter ist der erfindungsgemäße Stativadapter mit weiteren Sacklochöffnungen 32, 33, 34, 35 versehen, die jeweils quer zur Längsrichtung eines zylinderförmigen Abschnitts 31 des erfindungsgemäßen Stativadapters in den zylinderförmigen Abschnitt 31 des erfindungsgemäßen Stativadapters hineinragen und in Umfangsrichtung des zylinderförmigen Abschnitts 31 voneinander versetzt sind. Diese weiteren Sacklochöffnungen 32, 33, 34, 35 sind dazu vorgesehen, jeweils einen Stab 12, 13, 14, 15 (vgl. Fig. 5) aufzunehmen. In die genannten weiteren Sacklochöffnungen 32, 33, 34, 35 hineingesteckte Stäbe 12, 13, 14, 15 können dann als Stützen oder Spannstäbe zum Aufspannen einer Abschirmflagge 11 (vgl. Fig. 5) dienen, so dass sich auf diese Weise letztlich eine konkrete und ganz besondere Ausführungsform einer in Anspruch 1 und 2 der vorliegenden Patentanmeldung in allgemeinster Weise beschriebenen Kombinationsvorrichtung ergibt, wenn ein erfindungsgemäßer Stativadapter als Kupplungseinrichtung 5 im Sinne der bereits oben mit Bezug auf die Fig. 1 bis 12, insbesondere mit Bezug auf die Fig. 5 bis 11, getätigten Ausführungen verwendet wird.

Aufgrund der genannten weiteren Sacklochöffnungen 32, 33, 34, 35 wird ein zylinderförmiger Abschnitt 31 eines Ausführungsbeispiels eines erfindungsgemäßen Stativadapters in den allermeisten Fällen länger sein als ein entsprechender zylinderförmiger Abschnitt 24 eines im übrigen im wesentlichen gleich aufgebauten Ausführungsbeispiels eines aus dem Stand der Technik bekannten Stativadapters. Dies kommt bei den in den Fig. 13 bis 23 gezeigten Stativadapterbeispielen deutlich zum Ausdruck. Auf jeden Fall sollte der zylinderförmige Abschnitt 31 eines Ausführungsbeispiels des erfindungsgemäßen Stativadapters zumindest lang genug sein, dass ein Benutzer möglichst bequem hantieren und Stäbe 12, 13, 14, 15 in die weiteren Sacklochöffnungen 32, 33, 34, 35 hineinstecken, eine Abschirmflagge 11 daran aufspannen und eine etwaig vorhandene Arretiereinrichtung 30 bedienen kann, auch wenn der als Kupplungseinrichtung 5 fungierende Stativadapter gleichzeitig sowohl an ein Stativ 6, 7 als auch, etwa mittels der Schieneneinrichtung 4, dem Stativ 6, 7 gegenüberliegend an eine Reflektoreinrichtung 1, 2, 3 gekoppelt ist, so wie es rein schematisch und nicht maßstabsgerecht beispielsweise die Fig. 6 zeigt.

Im einzelnen ist ein erfindungsgemäßer Stativadapter in seiner allgemeinsten Grundform folgendermaßen aufgebaut (vgl. dazu auch die Fig. 17 bis 20, 22 und 23 sowie bereits vorausschauend auf ein weiteres Ausführungsbeispiel auch die Fig. 27 bis 30): Der erfindungsgemäße Stativadapter weist mindestens einen sich in einer Längsrichtung erstreckenden zylinderförmigen Abschnitt 31 mit einem ersten Ende 25 und einem dem ersten Ende 25 gegenüberliegenden zweiten Ende 26 auf. Das zweite Ende 26 ist versehen mit einer in der Längsrichtung in den zylinderförmigen Abschnitt 31 hineinragenden, zur Aufnahme einer Stativstange geeigneten ersten Sacklochöffnung 27, und/oder es ist in dem zylinderförmigen Abschnitt 31 quer zu der Längsrichtung eine zur Aufnahme einer Stativstange geeignete zweite Sacklochöffnung und/oder quer zu der Längsrichtung eine zur Aufnahme einer Stativstange geeignete durchgehende Öffnung 28 vorgesehen. Soweit findet sich auch alles bereits in dem aus dem Stand der Technik unter der Handelsbezeichnung "DLR-LOCK" bekannten Stativadapter (vgl. die Fig. 13 bis 16 und 21, wobei der zylinderförmige Abschnitt dort mit dem Bezugszeichen 24 versehen ist). Die besondere Eigenheit des erfindungsgemäßen Stativadapters besteht nun darin, dass in einem bestimmten Abstand vom ersten Ende 25 in dem zylinderförmigen Abschnitt 31 mindestens zwei weitere, bevorzugterweise mindestens drei weitere, noch bevorzugter mindestens vier weitere Sacklochöffnungen 32, 33, 34, 35 vorgesehen sind, die jeweils quer zur Längsrichtung in den zylinderförmigen Abschnitt 31 hineinragen, in Umfangsrichtung des zylinderförmigen Abschnitts 31 voneinander versetzt sind und dafür geeignet sind, jeweils einen Stab 12, 13, 14, 15 aufzunehmen, so dass mit Hilfe dieser Stäbe 12, 13, 14, 15 dann um den Stativadapter herum eine Abschirmflagge 11 aufgespannt werden kann. Die eben genannten Stäbe 12, 13, 14, 15 dienen also als Spannstäbe.

An dieser Stelle sei ausdrücklich folgendes als Einschub angemerkt: Der Begriff "Stativstange" und der synonym dazu verwendete Begriff "Stativstab" sind in der vorliegenden Patentanmeldung in dem Sinne zu verstehen, dass sie bedeuten können sowohl eine starre, manuell nicht biegbare Stativstange, als auch einen gewissermaßen "flexiblen" Haltearm, welcher so ausgebildet ist, dass er zwar mit manuellem Kraftaufwand gebogen werden kann, aber - selbst beim Anbringen einer gewissen Last wie etwa der Arretiereinrichtung 30 samt der Reflektoreinrichtung 1, 2, 3 - in seiner im Ergebnis dieses Biegens erlangten Form verbleibt, solange er nicht durch erneuten Kraftaufwand in eine andere Form gebogen wird. Ein solcher letztgenannter "flexibler" Haltearm als solcher ist - genau wie starre, manuell nicht biegbare Stativstäbe diverser Arten - bereits aus dem Stand der Technik bekannt und beispielsweise auf S. 45 der Broschüre dedolight Lightstream, English, 04/19 der Dedo Weigert Film GmbH, München, 2019 beschrieben und zu sehen.

Bei bevorzugten, in den Fig. 17 bis 20, 22 und 23 gezeigten Ausführungsbeispielen des erfindungsgemäßen Stativadapters weist der Stativadapter die genannte zweite Sacklochöffnung und/oder die genannte durchgehende Öffnung 28 auf, und die genannten weiteren Sacklochöffnungen 32, 33, 34, 35 sind vom zweiten Ende 26 weiter entfernt als die genannte zweite Sacklochöffnung und als die genannte durchgehende Öffnung 28.

Wie bereits weiter oben erläutert, ist es sinnvoll, solche Ausführungsbeispiele des erfindungsgemäßen Stativadapters zu bevorzugen, bei denen der Benutzer hinreichend Platz zum Hantieren hat. Es sind daher solche Ausführungsbeispiele des erfindungsgemäßen Stativadapters bevorzugt, bei denen der genannte bestimmte Abstand vom ersten Ende 25 mindestens vier Zentimeter, bevorzugterweise mindestens fünf Zentimeter, noch bevorzugter mindestens sechs Zentimeter beträgt.

Ganz besonders bevorzugt sind ferner solche Ausführungsbeispiele des erfindungsgemäßen Stativadapters, bei denen an dem ersten Ende 25 des zylinderförmigen Abschnitts 31 eine Arretiereinrichtung 30 zum Arretieren des Stativadapters in einer Schieneneinrichtung 4 vorgesehen ist. Eine derartige Arretiereinrichtung 30 als solche ist an sich bereits aus dem Stand der Technik bekannt und etwa in der Broschüre dedolight Lightstream, English, 04/19 der Dedo Weigert Film GmbH, München, 2019 auf den Seiten 44 bis 47 zu sehen. Dabei ist es besonders bevorzugt, wenn die Arretiereinrichtung 30 - so wie auch bereits bei dem "DLR-LOCK" aus dem Stand der Technik bekannt - unlösbar an dem zylinderförmigen Abschnitt 31 fixiert ist, wobei es daneben durchaus auch solche Ausführungsbeispiele des erfindungsgemäßen Stativadapters geben kann, bei denen die Arretiereinrichtung 30 lösbar an dem zylinderförmigen Abschnitt 31 fixiert ist.

Bevorzugterweise ist die Arretiereinrichtung 30 so ausgebildet, dass sie in der Schieneneinrichtung 4 hin und her gleiten und in beliebiger longitudinaler Position ihres Gleitweges arretiert werden kann. Dies ist an sich auch bereits aus dem Stand der Technik bekannt.

Ferner ist bei bevorzugten Ausführungsbeispielen des erfindungsgemäßen Stativadapters vorgesehen, dass die Arretiereinrichtung 30 so ausgebildet ist, dass der zylinderförmige Abschnitt 31 des Stativadapters einerseits und die Schieneneinrichtung 4 andererseits um eine Achse, die einer Längsachse des zylinderförmigen Abschnitts 31 entspricht, relativ gegeneinander gedreht und in beliebiger radialer Stellung des Drehweges arretiert werden können. Dies gilt insbesondere für solche besonders bevorzugten Ausführungsbeispiele des erfindungsgemäßen Stativadapters, bei denen die Arretiereinrichtung 30 unlösbar an dem zylinderförmigen Abschnitt 31 fixiert ist, kann aber auch auf solche Ausführungsbeispiele des erfindungsgemäßen Stativadapters angewendet werden, bei denen die Arretiereinrichtung 30 lösbar an dem zylinderförmigen Abschnitt 31 fixiert ist. In jedem Falle ist es als bevorzugt anzusehen, wenn ein Ausführungsbeispiel des erfindungsgemäßen Stativadapters so ausgebildet ist, dass der Drehweg einen Drehwinkel von 360° umfasst.

Da die genannten weiteren Sacklochöffnungen 32, 33, 34, 35 vorzugsweise zum Einstecken von Stäben 12, 13, 14, 15 dienen sollen, an denen eine Abschirmflagge 11 aufzuspannen ist, und da diese Stäbe 12, 13, 14, 15 regelmäßig dünner sind als übliche Stativstangen, sind viele Ausführungsbeispiele des erfindungsgemäßen Stativadapters so ausgebildet, dass ein Durchmesser jeder einzelnen der genannten weiteren Sacklochöffnungen 32, 33, 34, 35 höchstens dreiviertel so groß, bevorzugterweise höchstens halb so groß, noch bevorzugter höchstens ein Viertel so groß ist wie ein Durchmesser der genannten ersten Sacklochöffnung 27 oder der genannten zweiten Sacklochöffnung oder der genannten durchgehenden Öffnung 28.

Wie an sich bereits von den Stativadaptern aus dem Stand der Technik bekannt, ist auch bei vielen Ausführungsbeispielen des erfindungsgemäßen Stativadapters mindestens eine Feststellschraube 29 zum Arretieren einer Stativstange in der genannten ersten Sacklochöffnung 27 oder in der genannten zweiten Sacklochöffnung oder in der genannten durchgehenden Öffnung 28 vorgesehen.

Die in den Fig. 17 bis 20, 22 und 23 gezeigten, ganz besonders bevorzugten Ausführungsbeispiele des erfindungsgemäßen Stativadapters sind so ausgebildet, dass die Anzahl der genannten weiteren Sacklochöffnungen 32, 33, 34, 35 genau vier beträgt und diese genannten genau vier weiteren Sacklochöffnungen 32, 33, 34, 35 in dem genannten bestimmten Abstand vom ersten Ende 25 in Umfangsrichtung des zylinderförmigen Abschnitts 31 in 90°-Schritten voneinander versetzt angeordnet sind. Obzwar eine solche Ausführungsform im Hinblick auf den besonderen Zweck des erfindungsgemäßen Stativadapters in der Praxis ganz besonders bevorzugt ist, gibt es durchaus auch andere Ausführungsformen des erfindungsgemäßen Stativadapters mit einer kleineren oder größeren Anzahl der genannten weiteren Sacklochöffnungen. Bei einem anderen seiner Ausführungsbeispiele etwa ist der erfindungsgemäße Stativadapter so ausgebildet, dass die Anzahl der genannten weiteren Sacklochöffnungen genau drei beträgt und diese genannten genau drei weiteren Sacklochöffnungen in dem genannten bestimmten Abstand vom ersten Ende 25 in Umfangsrichtung des zylinderförmigen Abschnitts 31 in 120°-Schritten voneinander versetzt angeordnet sind. Die im vorliegenden Absatz gegebenen Erläuterungen zu den in Bezug auf die weiteren Sacklochöffnungen möglichen und im Bereich der vorliegend beanspruchten Erfindung liegenden Varianten gelten ganz genau so auch für diese weiteren Sacklochöffnungen in den nachfolgend noch genauer beschrieben werdenden Ausführungsbeispielen eines weiteren erfindungsgemäßen Stativadapters.

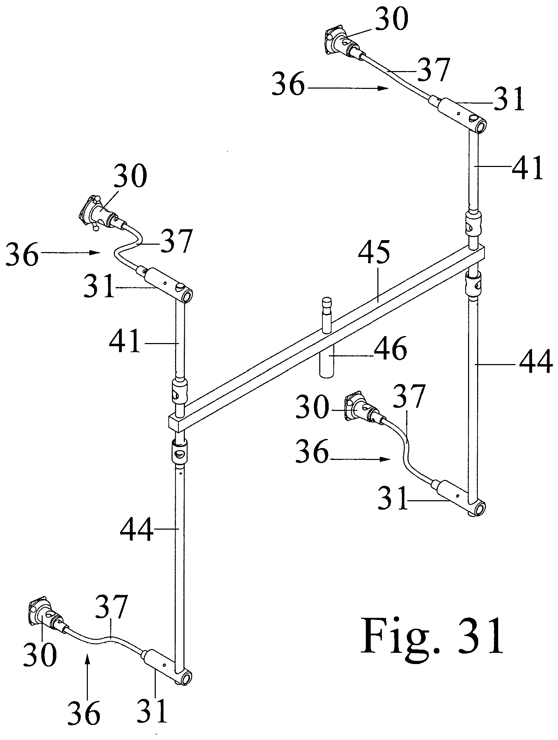

Unter Bezugnahme auf die Fig. 27 bis 30 sowie ergänzend auch auf die Fig. 24 und 31 werden nachfolgend Ausführungsbeispiele eines weiteren erfindungsgemäßen Stativadapters beschrieben. Hauptzweck dieses nun beschrieben werdenden weiteren erfindungsgemäßen Stativadapters ist es, wie bereits oben erwähnt, als Bestandteil der Kupplungseinrichtung 36 in Ausführungsbeispielen der erfindungsgemäßen Abschirmflaggeneinrichtung bzw. in Ausführungsbeispielen der erfindungsgemäßen Kombinationsvorrichtung verwendet zu werden - also geringfügig anders als bei dem weiter oben unter Bezugnahme auf die Fig. 17 bis 20, 22 und 23 beschriebenen Ausführungsbeispiel eines erfindungsgemäßen Stativadapters, welches tatsächlich bereits als solches als die Kupplungseinrichtung 5 in Ausführungsbeispielen der erfindungsgemäßen Abschirmflaggeneinrichtung bzw. in Ausführungsbeispielen der erfindungsgemäßen Kombinationsvorrichtung verwendbar ist.

Die Fig. 27 zeigt rein schematisch und nicht maßstabsgerecht ein Ausführungsbeispiel des weiteren erfindungsgemäßen Stativadapters in perspektivischer Ansicht. Man vgl. insofern auch die Fig. 24 und 31, in welchen dieses eben genannte Stativadapter-Ausführungsbeispiel als Bestandteil der Kupplungseinrichtung 36 zu sehen ist. Die Fig. 28 zeigt rein schematisch und nicht maßstabsgerecht das Ausführungsbeispiel des erfindungsgemäßen Stativadapters von Fig. 27 in einer längsseitigen Seitenansicht. Fig. 29 zeigt den Schnitt B - B von Fig. 28, und Fig. 30 zeigt den Schnitt A - A von Fig. 28.

Auch dieses in den Fig. 27 bis 30 dargestellte weitere Ausführungsbeispiel des erfindungsgemäßen Stativadapters weist einen sich in einer Längsrichtung erstreckenden zylinderförmigen Abschnitt 31 mit einem ersten Ende 25 und einem dem ersten Ende 25 gegenüberliegenden zweiten Ende 26 auf. Das zweite Ende 26 ist versehen mit einer in der Längsrichtung in den zylinderförmigen Abschnitt 31 hineinragenden, zur Aufnahme einer Stativstange geeigneten ersten Sacklochöffnung 27. Ferner ist in dem zylinderförmigen Abschnitt 31 quer zu der Längsrichtung eine zur Aufnahme einer Stativstange 41, 44 (vgl. Fig. 24 und 31) geeignete durchgehende Öffnung 28 vorgesehen. Zusätzlich zu oder alternativ zu der eben genannten durchgehenden Öffnung 28 kann bei anderen Ausführungsbeispielen des erfindungsgemäßen Stativadapters quer zu der Längsrichtung auch eine zweite Sacklochöffnung zur Aufnahme einer Stativstange vorgesehen sein. In einem bestimmten Abstand vom ersten Ende 25 befinden sich in dem zylinderförmigen Abschnitt 31 des in den Fig. 27 bis 30 gezeigten Stativadapter-Ausführungsbeispiels vier weitere Sacklochöffnungen 32, 33, 34, 35, die jeweils quer zur Längsrichtung in den zylinderförmigen Abschnitt 31 hineinragen, in Umfangsrichtung des zylinderförmigen Abschnitts 31 jeweils um 90° voneinander versetzt sind und dafür geeignet sind, jeweils einen Stab 12, 13, 14, 15 aufzunehmen, so dass mit Hilfe dieser Stäbe 12, 13, 14, 15, welche als Spannstäbe dienen, dann auch um dieses weitere Ausführungsbeispiel des erfindungsgemäßen Stativadapters herum eine Abschirmflagge 11 derart aufgespannt werden kann, wie es vom Prinzip her bereits weiter oben unter Bezugnahme auf die Fig. 5 beschrieben worden ist. Bei dem in den Fig. 27 bis 30 dargestellten weiteren Ausführungsbeispiel des erfindungsgemäßen Stativadapters ist ferner das erste Ende 25 versehen mit einer in der Längsrichtung in den zylinderförmigen Abschnitt 31 hineinragenden, zur Aufnahme einer Stativstange geeigneten dritten Sacklochöffnung 40. Bei anderen Ausführungsbeispielen des erfindungsgemäßen Stativadapters - und dies sei hier nur noch einmal der Vollständigkeit halber am Rande erwähnt - kann anstelle der oder zusätzlich zu der genannten und in den Fig. 27, 28 und 30 zu sehenden durchgehenden Öffnung 28 auch einfach nur eine zweite Sacklochöffnung vorgesehen sein.

An dieser Stelle sei nochmals ausdrücklich angemerkt, dass der Begriff "Stativstange" und der synonym dazu verwendete Begriff "Stativstab" in der vorliegenden Patentanmeldung in dem Sinne zu verstehen sind, dass sie bedeuten können sowohl eine starre, manuell nicht biegbare Stativstange, als auch einen gewissermaßen "flexiblen" Haltearm, welcher so ausgebildet ist, dass er zwar mit manuellem Kraftaufwand gebogen werden kann, aber - selbst beim Anbringen einer gewissen Last wie etwa der Arretiereinrichtung 30 samt der Reflektoreinrichtung 1, 2, 3 - in seiner im Ergebnis dieses Biegens erlangten Form verbleibt, solange er nicht durch erneuten Kraftaufwand in eine andere Form gebogen wird. Letzteres entspricht dem bereits weiter oben im Zusammenhang mit der erfindungsgemäßen Kupplungseinrichtung 36 beschriebenen länglichen biegsamen Abschnitt 37, der an seinen beiden Enden jeweils mit einem Zapfen 38, 39 versehen ist (vgl. Fig. 25). Einer dieser beiden eben genannten Zapfen kann beispielsweise in die im vorstehenden Absatz genannte dritte Sacklochöffnung 40 des genannten weiteren Ausführungsbeispiels des erfindungsgemäßen Stativadapters gesteckt werden (vgl. Fig. 24). Auf diese Weise wird, wie bereits weiter oben angedeutet, das genannte weitere Ausführungsbeispiel des erfindungsgemäßen Stativadapters dann Bestandteil einer erfindungsgemäßen Kupplungseinrichtung 36 zur Verwendung als die Kupplungseinrichtung 36 in bestimmten Ausführungsbeispielen der erfindungsgemäßen Abschirmflaggeneinrichtung und/oder zur Verwendung als die Kupplungseinrichtung in bestimmten Ausführungsbeispielen der erfindungsgemäßen Kombinationsvorrichtung (vgl. auch Fig. 24 und 31). Ein Ausführungsbeispiel einer erfindungsgemäßen Kupplungseinrichtung 36 weist ein Ausführungsbeispiel eines wie vorstehend unter Bezugnahme auf die Fig. 27 bis 30 beschriebenen Stativadapters auf. Der längliche biegsame Abschnitt 37 der eben genannten Kupplungseinrichtung 36 ist dabei mit seinem einen Ende entweder in der dritten Sacklochöffnung 40 oder in der ersten Sacklochöffnung 27 oder in der zweiten Sacklochöffnung oder in der durchgehenden Öffnung 28 des eben genannten erfindungsgemäßen Stativadapters fixiert. An dem anderen Ende des länglichen biegsamen Abschnitts 37 der Kupplungseinrichtung 36 ist eine Arretiereinrichtung 30 zum Arretieren der Kupplungseinrichtung 36 in der Schieneneinrichtung 4 befestigt. Diese Arretiereinrichtung 30 kann dabei zum Beispiel der bereits weiter oben unter Bezugnahme auf die Fig. 13 bis 16 und 21 beschriebene, aus dem Stand der Technik unter der Handelsbezeichnung "DLR-LOCK" bekannte Stativadapter sein. Dementsprechend ist die Arretiereinrichtung 30 bei bevorzugten Ausführungsbeispielen der erfindungsgemäßen Kupplungseinrichtung 36 so ausgebildet, dass die Arretiereinrichtung 30 in der Schieneneinrichtung 4 hin und her gleiten und in beliebiger longitudinaler Position ihres Gleitweges arretiert werden kann (vgl. dazu auch Fig. 21). Ferner ist bei bevorzugten Ausführungsbeispielen der erfindungsgemäßen Kupplungseinrichtung 36 die Arretiereinrichtung 30 so ausgebildet, dass die Schieneneinrichtung 4 mit darin eingesetzter Arretiereinrichtung 30 gedreht werden kann um eine Achse, die sowohl durch die Vorderseite 2 der Reflektoreinrichtung als auch durch die Rückseite 3 der Reflektoreinrichtung als auch durch die Schieneneinrichtung 4 verläuft und orthogonal zur Schieneneinrichtung 4 ausgerichtet ist, und dass die Schieneneinrichtung 4 in beliebiger radialer Stellung des Drehweges mittels der Arretiereinrichtung 30 arretiert werden kann. Ganz besonders bevorzugt sind dabei solche Ausführungsbeispiele der erfindungsgemäßen Kupplungseinrichtung 36, bei denen der Drehweg einen Drehwinkel von 360° umfasst.

Unter Bezugnahme auf die Fig. 28 und 30 sei an dieser Stelle lediglich der Vollständigkeit halber angemerkt, dass die in den Fig. 28 und 30 in dem zylinderförmigen Abschnitt 31 zu sehenden zwei Schraubenaufnahme-Öffnungen 42, 43 zur Aufnahme von Feststellschrauben ganz ähnlich der bereits weiter oben mit Bezug auf die Fig. 13 bis 23 beschriebenen Feststellschraube 29 dienen können. Rein der Übersichtlichkeit halber ist in den Fig. 27, 28, 30 und 31 auf die Darstellung derartiger Feststellschrauben verzichtet worden.

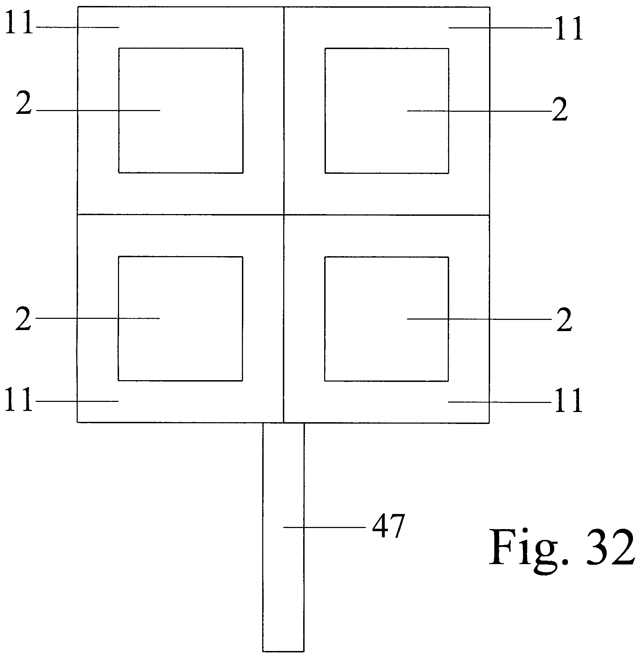

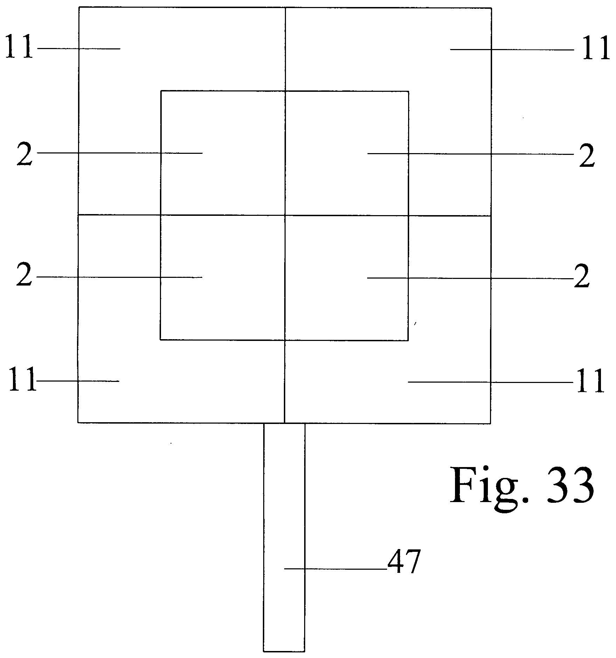

Die Fig. 31 zeigt rein schematisch und nicht maßstabsgerecht eine perspektivische Ansicht einiger zusammengesetzter Teile eines ganz besonders vorteilhaften Ausführungsbeispiels einer erfindungsgemäßen Kombinationsvorrichtungssystem-Vorrichtung von hinten gesehen mit vier - in der Darstellung der Fig. 31 weggelassenen - gegeneinander verkippbaren Reflektoreinrichtungen. Die Fig. 32 und 33 zeigen dieses besondere Ausführungsbeispiel der erfindungsgemäßen Kombinationsvorrichtungssystem-Vorrichtung jeweils von vorne gesehen, d.h. aus der Richtung, aus welcher die lichtreflektierenden Vorderseiten 2 der vier Reflektoreinrichtungen zu sehen sind. Vorhanden sind ferner vier Abschirmflaggen 11, welche sowohl in ihrer gemäß Fig. 32 gewählten Einstellung als auch in ihrer gemäß Fig. 33 gewählten Einstellung aneinander anstoßen, so wie es in den Fig. 32 und 33 zu sehen ist. Die Einstellungen des hier dargestellten Ausführungsbeispiels der erfindungsgemäßen Kombinationsvorrichtungssystem-Vorrichtung von Fig. 32 und von Fig. 33 unterscheiden sich voneinander nur dadurch, dass das eine Mal, nämlich bei Fig. 32, die Reflektoreinrichtungen (zu sehen sind in den Fig. 32 und 33 deren lichtreflektierende Vorderseiten 2) nicht aneinander anstoßend eingestellt sind und das andere Mal, nämlich bei Fig. 33, die Reflektoreinrichtungen aneinander anstoßend eingestellt sind.

Das in den Fig. 31 bis 33 dargestellte, besonders vorteilhafte Ausführungsbeispiel der erfindungsgemäßen Kombinationsvorrichtungssystem-Vorrichtung weist vier erfindungsgemäße Kombinationsvorrichtungen auf, die jeweils mit einem solchen Ausführungsbeispiel einer erfindungsgemäßen Kupplungseinrichtung 36 versehen sind, wie es oben unter Bezugnahme auf die Fig. 24 beschrieben worden ist. Jeweils ein länglicher biegsamer Abschnitt 37 jeder einzelnen der vier in dem hier dargestellten Ausführungsbeispiel der erfindungsgemäßen Kombinationsvorrichtungssystem-Vorrichtung vorhandenen erfindungsgemäßen Kupplungseinrichtungen 36 verbindet jeweils einen erfindungsgemäßen Stativadapter mit jeweils einer Arretiereinrichtung 30. Von dem eben genannten erfindungsgemäßen Stativadapter ist in Fig. 31 der Übersichtlichkeit halber jeweils nur der zylinderförmige Abschnitt 31 mit dem entsprechenden Bezugszeichen versehen. Für genauere Details zu diesem Stativadapter-Ausführungsbeispiel siehe die Fig. 24 sowie 27 bis 30 und die obigen ausführlichen Erläuterungen dazu. In den bereits oben genauer beschriebenen weiteren Sacklöchern 32, 33, 34, 35, welche jeweils in den zylinderförmigen Abschnitt 31 des Stativadapters eingelassen sind, stecken jeweils Stäbe 12, 13, 14, 15, mit Hilfe derer die jeweilige Abschirmflagge 11 an der jeweiligen Kupplungseinrichtung 36 befestigt - man kann auch sagen aufgespannt - ist. Man vergleiche insoweit auch die Darstellung von Fig. 5, die das diesbezügliche entsprechende grundlegende Prinzip des Aufspannens der Abschirmflagge 11 mit Hilfe der als Spannstäbe dienenden Stäbe 12, 13, 14, 15 verdeutlicht. Von den genannten weiteren Sacklöchern 32, 33, 34, 35 ist in Fig. 31 jeweils nur eines in dem jeweiligen zylinderförmigen Abschnitt 31 zu sehen. Der Übersichtlichkeit halber wurde das zugehörige Bezugszeichen in Fig. 31 weggelassen. Insofern ist zum Detail-Vergleich die Fig. 24 heranzuziehen, welche nichts weiter als eine vergrößerte Darstellung der linken oberen Kupplungseinrichtung 36 von Fig. 31 ist. Hinsichtlich der weiteren Sacklöcher 32, 33, 34, 35 wird verwiesen auf die Fig. 28 und 29. Auch die Stäbe 12, 13, 14, 15, mit Hilfe derer die jeweilige Abschirmflagge 11 an der jeweiligen Kupplungseinrichtung 36 befestigt ist, sowie die jeweilige Abschirmflagge 11 sind in der Darstellung der Fig. 31 aus Übersichtlichkeitsgründen weggelassen. Zur Veranschaulichung wird insoweit auf die Fig. 5 verwiesen, wobei sich dann dort einfach an die Stelle des Bezugszeichens 5 das Bezugszeichen 36 und an die Stelle des Bezugszeichens 6 das Bezugszeichen 41 oder das Bezugszeichen 44 gedacht werden muss.

Auf jeder der in Fig. 31 dargestellten Arretiereinrichtungen 30 sitzt, wie als solches bereits weiter oben mehrfach ausführlich beschrieben, jeweils eine - in der Darstellung von Fig. 31 nicht gezeigte - Reflektoreinrichtung. Die jeweilige Arretiereinrichtung 30 greift dabei wie gehabt in die Schieneneinrichtung 4 der Reflektoreinrichtung ein und ist dort arretierbar - ganz genau so, wie es in den Fig. 21 bis 23 für im übrigen etwas anders geartete Kupplungseinrichtungen gezeigt ist.

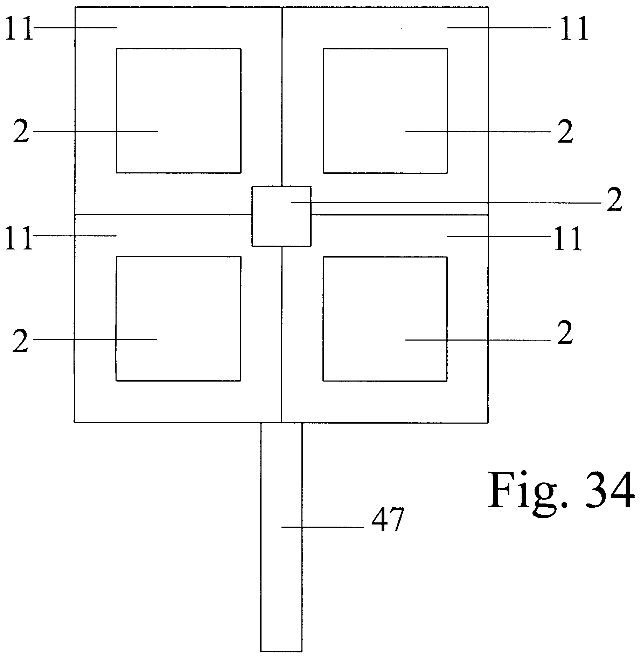

Mithin weist das hier beschriebene Ausführungsbeispiel der erfindungsgemäßen Kombinationsvorrichtungssystem-Vorrichtung, von welchem in Fig. 31 nur einige zusammengesetzte Teile dargestellt sind, vier Reflektoreinrichtungen (in Fig. 31 aus Übersichtlichkeitsgründen nicht gezeigt) und vier Abschirmflaggen 11 (in Fig. 31 aus Übersichtlichkeitsgründen ebenfalls nicht gezeigt) auf. Es sind hier also vier erfindungsgemäße Kombinationsvorrichtungen versammelt, welche über starre Stativstangen 41, 44 unterschiedlicher Länge an einer gemeinsamen starren Stativbasis 45 angebracht sind. An einem zentralen Zapfen 46 dieser Stativbasis 45 ist ein - in Fig. 31 nicht gezeigter, aber in den Fig. 32 und 33 (wie übrigens auch in Fig. 34) rein schematisch angedeuteter, - Haupt-Stativfuß 47 oder eine - in Fig. 31 nicht gezeigte - Haupt-Stativaufhängung befestigt, welcher dementsprechend alle vier Kombinationsvorrichtungen trägt bzw. an welcher dementsprechend alle vier Kombinationsvorrichtungen hängen.

Bevorzugt sind dabei solche Ausführungsbeispiele der erfindungsgemäßen Kombinationsvorrichtungssystem-Vorrichtung, bei welchen alle darin vorhandenen Abschirmflaggen 11 so eingerichtet und ausgelegt sind, dass sie alle gemeinsam in einer Ebene liegen und so eingestellt sind, dass sie eng aneinander anstoßen oder sogar einander teilweise überlappen, so dass sich eine im wesentlichen ebene, zusammenhängende Abschirmflaggenfläche bildet, die größer ist als die Fläche jeder einzelnen der in der Kombinationsvorrichtungssystem-Vorrichtung enthaltenen Abschirmflaggen 11. Von vorne, also mit Blickrichtung auf die Vorderseiten 2 der Reflektoreinrichtungen gesehen, sähe das dann aus, als habe man den rechten Rand der Abschirmflagge 11 von Fig. 11 mit dem linken Rand der Abschirmflagge 11 von Fig. 10 aneinandergelegt und unmittelbar über dieser Zusammenfügung dieser beiden Abschirmflaggen 11 und dabei unmittelbar angrenzend an diese Zusammenfügung die Abschirmflaggen 11 von Fig. 8 und von Fig. 9 ganz entsprechend zusammengelegt, wobei die vier Reflektoreinrichtungen natürlich innerhalb ihres jeweils zugehörigen Abschirmflaggenbereichs einzeln verschiebbar bleiben. Wie bereits weiter oben in anderem Zusammenhang beschrieben, können nämlich die Schieneneinrichtungen 4 auf den Arretiereinrichtungen 30 jeweils in verschiedene Richtungen verschoben und/oder gedreht und dann in der jeweiligen Verschiebe- und Drehposition arretiert werden.

Mittels des in jeder einzelnen Kupplungseinrichtung 36 in dem besonders bevorzugten Ausführungsbeispiel der erfindungsgemäßen Kombinationsvorrichtungssystem-Vorrichtung von Fig. 31 vorgesehenen länglichen biegsamen Abschnitts 37 kann darüber hinaus jede einzelne der vier Reflektoreinrichtungen bezogen auf die von den Abschirmflaggen 11 im Raum aufgespannte Ebene in jede beliebige Richtung manuell gekippt werden. Die Reflektoreinrichtungen sind mithin in Relation zur Ebene der Abschirmflaggen verwinkelbar. Dies ist eine wesentliche Eigenschaft des hier mit Bezugnahme auf die Fig. 31 bis 33 beschriebenen und ganz besonders bevorzugten Ausführungsbeispiels der erfindungsgemäßen Kombinationsvorrichtungssystem-Vorrichtung, was weiter unten gleich noch ausführlicher diskutiert wird. Die Materialeigenschaften des jeweiligen länglichen biegsamen Abschnitts 37 stellen sicher, dass die jeweilige Reflektoreinrichtung solange in der gewählten Kippstellung verbleibt, bis der jeweilige längliche biegsame Abschnitt 37 mittels manueller Krafteinwirkung in eine andere Richtung gebogen wird.

Es sei jedoch an dieser Stelle ausdrücklich angemerkt, daß es auch andere - allerdings weniger vorteilhafte und daher weniger bevorzugte - Ausführungsbeispiele der erfindungsgemäßen Kombinationsvorrichtungssystem-Vorrichtung gibt, bei denen die eben beschriebene Verwinkelbarkeit der Reflektoreinrichtungen in Relation zur Ebene der Abschirmflaggen 11 nicht gegeben ist.

Die im vorvorhergehenden Absatz beschriebene freie Verkippbarkeit der einzelnen Reflektoreinrichtungen bei unverändert bleibender Lage der Abschirmflaggen 11 im Raum ist allerdings dann notwendig, wenn ein von einem einzigen Scheinwerfer kommender Lichtkegel zwecks spezieller, differenzierter Ausleuchtung einer Szene durch die Kombinationsvorrichtungssystem-Vorrichtung in verschiedene Richtungen umgelenkt werden soll. Ohne die genannte freie Verkippbarkeit der einzelnen Reflektoreinrichtungen bei unverändert bleibender Lage der Abschirmflaggen 11 im Raum müssten nämlich sonst jeweils auch die Abschirmflaggen 11 mit gekippt werden, was zumindest bei unterschiedlichen Kippwinkeln und/oder unterschiedlichen Kipprichtungen der einzelnen Kombinationen zu unlösbaren Konflikten zwischen den einzelnen Abschirmflaggen 11 führen würde und mithin nicht durchführbar wäre. Demgegenüber ist es mit Hilfe des in den Fig. 31 bis 33 dargestellten, ganz besonders bevorzugten Ausführungsbeispiels der erfindungsgemäßen Kombinationsvorrichtungssystem-Vorrichtung möglich, mit einem einzigen Scheinwerfer bzw. einer einzigen Leuchte eine Szene auszuleuchten, zu deren Ausleuchtung man im Stand der Technik mehrere, beispielsweise vier oder fünf, Scheinwerfer bzw. Leuchten benötigte. Erreicht wird dies einfach durch unterschiedliches Ankippen der einzelnen Reflektoreinrichtungen, wobei die Reflektoreinrichtungen natürlich dabei so einzustellen sind, dass sie alle - jedenfalls soweit sie für die differenzierte Ausleuchtung der jeweiligen Szene benötigt werden - vom Lichtkegel des genannten einzigen Scheinwerfers erfasst werden. Dies reduziert gegenüber dem Stand der Technik die Anzahl der für die Ausleuchtung einer Szene benötigten Scheinwerfer und damit auch die für die Ausleuchtung dieser Szene benötigte elektrische Energie, was ein positiver Beitrag zur Verbesserung der Technik im Sinne der Medienökologie ist.

Die Reflektoreinrichtungen können in dem hier mit Bezugnahme auf die Fig. 31 bis 33 beschriebenen Ausführungsbeispiel der erfindungsgemäßen Kombinationsvorrichtungssystem-Vorrichtung so nahe aneinander geschoben werden, dass sie, wenn es sich beispielsweise um vier einheitliche Reflektoreinrichtungen mit jeweils einer quadratischen lichtreflektierenden Vorderseite 2 handelt, eine gemeinsame, zusammenhängende quadratische lichtreflektierende Fläche bilden, die - um in dem gewählten Ausführungsbeispiel zu bleiben - viermal so groß ist wie die Fläche der lichtreflektierenden Vorderseite 2 einer einzelnen der Reflektorflächen. Eine solche Einstellung der Reflektoreinrichtungen ist in Fig. 33 dargestellt. Die Reflektoreinrichtungen können aber für andere, differenziertere Ausleuchtungszwecke auch voneinander entfernt angeordnet werden, was durch Verschiebung und etwaige Drehung der jeweiligen Schieneneinrichtungen 4 erreicht wird. Eine solche Einstellung der Reflektoreinrichtungen ist in Fig. 32 dargestellt.

Darüber hinaus kann - wie es bereits weiter oben beschrieben wurde - bei dem in den Fig. 31 bis 33 dargestellten Ausführungsbeispiel der erfindungsgemäßen Kombinationsvorrichtungssystem-Vorrichtung jede einzelne Reflektoreinrichtung unabhängig von jeder anderen der Reflektoreinrichtungen in Relation zur durch die Abschirmflaggen 11 aufgespannten Ebene in beliebiger Richtung verkippt werden, was eine umfassende und gleichzeitig differenzierte Ausleuchtung einer kompletten Szene unter Verwendung lediglich eines einzigen Scheinwerfers bzw. lediglich einer einzigen Leuchte ermöglicht und somit im Sinne der Medienökologie ganz besonders vorteilhaft ist. Dabei ist es nur notwendig sicherzustellen, dass dieser singuläre Scheinwerfer einerseits und die erfindungsgemäße Kombinationsvorrichtungssystem-Vorrichtung andererseits relativ zueinander derart platziert werden, dass der von dem genannten Scheinwerfer ausgehende Lichtkegel auch tatsächlich jede der für die Ausleuchtung der in Frage stehenden Szene benötigten Reflektoreinrichtungen erreicht.

Zum Setzen weiterer Akzente in der Ausleuchtung einer Szene kann bzw. können sogar eine weitere Reflektoreinrichtung oder mehrere weitere Reflektoreinrichtungen als "Akzent-Reflektoreinrichtung(en)" vorgesehen werden, deren Montage erfolgt, indem sie über einen flexiblen Haltearm - ähnlich dem oben erläuterten länglichen biegsamen Abschnitt 37 der Kupplungseinrichtung 36 - mittels einer Arretiereinrichtung 30 an der Schieneneinrichtung 4 der einen und/oder anderen bereits in der Kombinationsvorrichtungssystem- Vorrichtung enthaltenen Reflektoreinrichtung befestigt wird bzw. werden. Man betrachte dazu die Fig. 26 und denke sich dort zusätzlich zu der auf dem in der Darstellung der Fig. 26 nach unten weisenden Zapfen 38 bereits vorhandenen Arretiereinrichtung 30 eine weitere, ebensolche Arretiereinrichtung 30 auf dem in der Darstellung der Fig. 26 nach oben weisenden Zapfen 39. Zur weiteren Veranschaulichung dieses speziellen möglichen Konstruktionsdetails wird auch verwiesen auf die beiden oberen Fotos auf S. 45 der Broschüre dedolight Lightstream, English, 04/19 der Dedo Weigert Film GmbH, München, 2019.

Die Fig. 34 zeigt rein schematisch und nicht maßstabsgerecht die Ansicht des Ausführungsbeispiels der erfindungsgemäßen Kombinationsvorrichtungssystem-Vorrichtung von Fig. 32, in der Mitte ergänzt um eine solche und wie eben beschrieben montierte Akzent-Reflektoreinrichtung.

Ein solche weitere - und, so wie auch in Fig. 34 dargestellt, häufig kleinere - Reflektoreinrichtung ("Akzent-Reflektoreinrichtung") kann beispielsweise in eine völlig andere Richtung weisend eingestellt werden als eine beliebige andere der in der erfindungsgemäßen Kombinationsvorrichtungssystem-Vorrichtung ansonsten noch vorhandenen Reflektoreinrichtungen, und sie kann dienen entweder zum Setzen eines "Akzents" in einer ansonsten gleichmäßig ausgeleuchteten Fläche, oder zur weiteren besonders akzentuierten Ausleuchtung einer bereits differenziert beleuchteten Szene. Selbst bei einer solchen letztgenannten weiter verfeinerten Anordnung zur besonders akzentuierten Ausleuchtung einer Szene unter Verwendung des hier beschriebenen besonders vorteilhaften und bevorzugten Ausführungsbeispiels der erfindungsgemäßen Kombinationsvorrichtungssystem-Vorrichtung wird - ganz im Sinne der Medienökologie - jetzt nach wie vor nur ein einziger Scheinwerfer benötigt, wo im Stand der Technik zur Ausleuchtung fünf Scheinwerfer erforderlich waren. Dies wird ermöglicht durch die Verwinkelbarkeit der Reflektoreinrichtungen in Relation zu der durch die Abschirmflaggen aufgespannten Ebene. Diese Verwinkelbarkeit der Reflektoreinrichtungen in Relation zu der durch die Abschirmflaggen aufgespannten Ebene bleibt bei dem mit Bezug auf die Fig. 31 beschriebenen Ausführungsbeispiel der erfindungsgemäßen Kombinationsvorrichtungssystem-Vorrichtung sogar dann erhalten, wenn alle darin enthaltenen Reflektoreinrichtungen mittels ihrer jeweiligen Schieneneinrichtungen 4 und der darin jeweils eingreifenden Arretiereinrichtungen 30 so hingeschoben werden, dass sich die Reflektoreinrichtungen alle sehr nahe beieinander befinden, so wie es die Fig. 33 zeigt.

## Patentansprüche

1. Kombinationsvorrichtung, aufweisend eine Abschirmflaggeneinrichtung in Kombination mit einer Reflektoreinrichtung, wobei die Reflektoreinrichtung ein flächenhaft ausgeführtes Gebilde (1) mit einer Vorderseite (2) und einer Rückseite (3) ist, die Vorderseite (2) lichtreflektierend ausgebildet ist und die Rückseite (3) mit einer Schieneneinrichtung (4) versehen ist, welche so eingerichtet ist, dass in sie eine ferner vorgesehene und an die Schieneneinrichtung (4) angepasste Kupplungseinrichtung (5, 36) derart arretierbar eingreifen kann, dass eine Lage der Schieneneinrichtung (4) relativ zur Kupplungseinrichtung (5, 36) in Längsrichtung der Schieneneinrichtung (4) einstellbar veränderbar ist und die Kupplungseinrichtung (5, 36) in mehreren unterschiedlichen Positionen bezogen auf die Längsrichtung der Schieneneinrichtung (4) in der Schieneneinrichtung (4) arretierbar ist, und wobei die Kupplungseinrichtung (5, 36) zur lösbaren Befestigung des mit der Schieneneinrichtung (4) versehenen flächenhaft ausgeführten Gebildes (1) an einer Stativeinrichtung (6, 7, 41, 44) und/oder an einer Aufhängungseinrichtung vorgesehen und entsprechend ausgebildet ist, **dadurch gekennzeichnet, dass** die Kupplungseinrichtung (5, 36) derart eingerichtet ist, dass sie als Basis einer um sie herum aufgespannten Abschirmflagge (11) dient und die Abschirmflagge (11) so gestaltet und auf das flächenhaft ausgeführte Gebilde (1) abgestimmt ist, dass es mindestens eine erste Arretierstellung der Kupplungseinrichtung (5, 36) in der Schieneneinrichtung (4) gibt derart, dass in dieser ersten Arretierstellung der Kupplungseinrichtung (5, 36) in der Schieneneinrichtung (4) bei Betrachtung der Kombination der Abschirmflaggeneinrichtung und der Reflektoreinrichtung von der Vorderseite (2) her die Abschirmflagge (11) an jeder Stelle eines gesamten Randes des flächenhaft ausgeführten Gebildes (1) über den Rand des flächenhaft ausgeführten Gebildes (1) hinausragt und somit die Vorderseite (2) vollständig von der Abschirmflagge (11) umrahmt ist, wenn sich die Kupplungseinrichtung (5, 36) in der genannten ersten Arretierstellung in der Schieneneinrichtung (4) befindet.

2. Kombinationsvorrichtung, aufweisend eine Abschirmflaggeneinrichtung in Kombination mit einer Reflektoreinrichtung, wobei die Reflektoreinrichtung ein flächenhaft ausgeführtes Gebilde (1) mit einer Vorderseite (2) und einer Rückseite (3) ist, die Vorderseite (2) lichtreflektierend ausgebildet ist und die Rückseite (3) mit einer Schieneneinrichtung (4) versehen ist, welche so eingerichtet ist, dass in sie eine ferner vorgesehene und an die Schieneneinrichtung (4) angepasste Kupplungseinrichtung (5, 36) derart arretierbar eingreifen kann, dass eine Lage der Schieneneinrichtung (4) relativ zur Kupplungseinrichtung (5, 36) in Längsrichtung der Schieneneinrichtung (4) einstellbar veränderbar ist und die Kupplungseinrichtung (5, 36) in mehreren unterschiedlichen Positionen bezogen auf die Längsrichtung der Schieneneinrichtung (4) in der Schieneneinrichtung (4) arretierbar ist, und wobei die Kupplungseinrichtung (5, 36) zur lösbaren Befestigung des mit der Schieneneinrichtung (4) versehenen flächenhaft ausgeführten Gebildes (1) an einer Stativeinrichtung (6, 7, 41, 44) und/oder an einer Aufhängungseinrichtung vorgesehen und entsprechend ausgebildet ist, wobei sowohl die Reflektoreinrichtung, d.h. deren flächenhaft ausgeführtes Gebilde (1), als auch die Abschirmflagge (11) rechteckig sind, **dadurch gekennzeichnet, dass** die Kupplungseinrichtung (5, 36) derart eingerichtet ist, dass sie als Basis einer um sie herum aufgespannten Abschirmflagge (11) dient und das flächenhaft ausgeführte Gebilde (1), die Abschirmflagge (11), die Schieneneinrichtung (4) und die Kupplungseinrichtung (5, 36) derart eingerichtet und aufeinander abgestimmt sind, dass es eine Arretierstellung der Kupplungseinrichtung (5, 36) in der Schieneneinrichtung (4) gibt derart, dass in dieser eben genannten Arretierstellung der Kupplungseinrichtung (5, 36) in der Schieneneinrichtung (4) bei Betrachtung der Kombination der Abschirmflaggeneinrichtung und der Reflektoreinrichtung von der Vorderseite (2) her die Abschirmflagge (11) an drei Kanten des flächenhaft ausgeführten Gebildes (1) an jeder Stelle des dortigen Randes des flächenhaft ausgeführten Gebildes (1) über den dortigen Rand des flächenhaft ausgeführten Gebildes (1) hinausragt und an einer Kante des flächenhaft ausgeführten Gebildes (1) an keiner Stelle des dortigen Randes des flächenhaft ausgeführten Gebildes (1) über den dortigen Rand des flächenhaft ausgeführten Gebildes (1) hinausragt.

3. Kombinationsvorrichtung nach Anspruch 1, **dadurch gekennzeichnet, dass** sowohl die Reflektoreinrichtung, d.h. deren flächenhaft ausgeführtes Gebilde (1), als auch die Abschirmflagge (11) rechteckig sind und das flächenhaft ausgeführte Gebilde (1), die Abschirmflagge (11), die Schieneneinrichtung (4) und die Kupplungseinrichtung (5, 36) derart eingerichtet und aufeinander abgestimmt sind, dass es eine zweite Arretierstellung der Kupplungseinrichtung (5, 36) in der Schieneneinrichtung (4) gibt derart, dass in dieser zweiten Arretierstellung der Kupplungseinrichtung (5, 36) in der Schieneneinrichtung (4) bei Betrachtung der Kombination der Abschirmflaggeneinrichtung und der Reflektoreinrichtung von der Vorderseite (2) her die Abschirmflagge (11) an drei Kanten des flächenhaft ausgeführten Gebildes (1) an jeder Stelle des dortigen Randes des flächenhaft ausgeführten Gebildes (1) über den dortigen Rand des flächenhaft ausgeführten Gebildes (1) hinausragt und an einer Kante des flächenhaft ausgeführten Gebildes (1) an keiner Stelle des dortigen Randes des flächenhaft ausgeführten Gebildes (1) über den dortigen Rand des flächenhaft ausgeführten Gebildes (1) hinausragt.

4. Kombinationsvorrichtung nach Anspruch 2 oder nach Anspruch 3, **dadurch gekennzeichnet, dass** das flächenhaft ausgeführte Gebilde (1), die Abschirmflagge (11), die Schieneneinrichtung (4) und die Kupplungseinrichtung (5, 36) derart eingerichtet und aufeinander abgestimmt sind, dass es eine dritte Arretierstellung der Kupplungseinrichtung (5, 36) in der Schieneneinrichtung (4) gibt derart, dass in dieser dritten Arretierstellung der Kupplungseinrichtung (5, 36) in der Schieneneinrichtung (4) bei Betrachtung der Kombination der Abschirmflaggeneinrichtung und der Reflektoreinrichtung von der Vorderseite (2) her die Abschirmflagge (11) an drei Kanten des flächenhaft ausgeführten Gebildes (1) an jeder Stelle des dortigen Randes des flächenhaft ausgeführten Gebildes (1) über den dortigen Rand des flächenhaft ausgeführten Gebildes (1) hinausragt und an einer Kante des flächenhaft ausgeführten Gebildes (1) an keiner Stelle des dortigen Randes des flächenhaft ausgeführten Gebildes (1) über den dortigen Rand des flächenhaft ausgeführten Gebildes (1) hinausragt, wobei
- hinsichtlich der Rückbeziehung auf Anspruch 2 die Kante des flächenhaft ausgeführten Gebildes (1), an der die Abschirmflagge (11) in der dritten Arretierstellung der Kupplungseinrichtung (5, 36) in der Schieneneinrichtung (4) nicht über den Rand des flächenhaft ausgeführten Gebildes (1) hinausragt, derjenigen Kante des flächenhaft ausgeführten Gebildes (1) gegenüberliegt, an der die Abschirmflagge (11) in der in Anspruch 2 genannten Arretierstellung der Kupplungseinrichtung (5, 36) in der Schieneneinrichtung (4) nicht über den Rand des flächenhaft ausgeführten Gebildes (1) hinausragt, und
- hinsichtlich der Rückbeziehung auf Anspruch 3 die Kante des flächenhaft ausgeführten Gebildes (1), an der die Abschirmflagge (11) in der dritten Arretierstellung der Kupplungseinrichtung (5, 36) in der Schieneneinrichtung (4) nicht über den Rand des flächenhaft ausgeführten Gebildes (1) hinausragt, derjenigen Kante des flächenhaft ausgeführten Gebildes (1) gegenüberliegt, an der die Abschirmflagge (11) in der zweiten Arretierstellung der Kupplungseinrichtung (5, 36) in der Schieneneinrichtung (4) nicht über den Rand des flächenhaft ausgeführten Gebildes (1) hinausragt.

5. Kombinationsvorrichtung nach einem der vorhergehenden Ansprüche, **dadurch gekennzeichnet, dass** die Schieneneinrichtung (4) und die Kupplungseinrichtung (5, 36) so eingerichtet und aufeinander abgestimmt sind, dass es bei festgehaltener Position zum Arretieren der Kupplungseinrichtung (5, 36) in Bezug auf die Längsrichtung der Schieneneinrichtung (4) mindestens zwei radial unterschiedliche Stellungen zum Arretieren der Kupplungseinrichtung (5, 36) in der Schieneneinrichtung (4) gibt, wobei ein Übergang zwischen diesen beiden eben genannten radial unterschiedlichen Stellungen zum Arretieren der Kupplungseinrichtung (5, 36) in der Schieneneinrichtung (4) durch Drehung der Schieneneinrichtung (4) relativ zur Kupplungseinrichtung (5, 36) um einen bestimmten Drehwinkel erfolgt und die genannte Drehung um eine gedachte Achse erfolgt, die sowohl durch die Vorderseite (2) als auch durch die Rückseite (3) als auch durch die Schieneneinrichtung (4) als auch durch die Kupplungseinrichtung (5, 36) verläuft und orthogonal zur Schieneneinrichtung (4) ausgerichtet ist.

6. Kombinationsvorrichtung nach Anspruch 5, **dadurch gekennzeichnet, dass** die Schieneneinrichtung (4) und die Kupplungseinrichtung (5, 36) so eingerichtet und aufeinander abgestimmt sind, dass die Kupplungseinrichtung (5, 36) in jeder beliebigen Drehposition bezogen auf eine Drehung der Schieneneinrichtung (4) relativ zur Kupplungseinrichtung (5, 36) um die genannte gedachte Achse herum in der Schieneneinrichtung (4) arretierbar ist.

7. Kombinationsvorrichtung nach einem der vorhergehenden Ansprüche, **dadurch gekennzeichnet, dass** die Kupplungseinrichtung (36) so ausgebildet ist, dass sie es ermöglicht, das flächenhaft ausgeführte Gebilde (1) sowohl parallel zu einer Ebene, in welcher die Abschirmflagge (11) aufgespannt ist, als auch in verschiedenen Richtungen und Winkeln gekippt zu der Ebene, in welcher die Abschirmflagge (11) aufgespannt ist, einzustellen.

8. Kombinationsvorrichtung nach Anspruch 7, **dadurch gekennzeichnet, dass** die Kupplungseinrichtung (36) so eingerichtet ist, dass sie einen länglichen biegsamen Abschnitt (37) aufweist, welcher so ausgebildet ist, dass er zwar mit manuellem Kraftaufwand gebogen werden kann, aber in seiner im Ergebnis dieses Biegens erlangten Form verbleibt, solange er nicht durch erneuten Kraftaufwand in eine andere Form gebogen wird, und dass mittels des Biegens des genannten länglichen biegsamen Abschnitts (37) verschiedene Ausrichtungen des flächenhaft ausgeführten Gebildes (1) im Raum eingestellt werden können, ohne dass dabei die Lage der Abschirmflagge (11) im Raum geändert wird.

9. Kombinationsvorrichtung nach einem der vorhergehenden Ansprüche, **dadurch gekennzeichnet, dass** sie so eingerichtet und ausgebildet ist, dass die Abschirmflagge (11) auswechselbar ist.

10. Kombinationsvorrichtung nach einem der vorhergehenden Ansprüche, **dadurch gekennzeichnet, dass** sie so eingerichtet und ausgebildet ist, dass mindestens ein Abschirmflaggenzusatz vorgesehen ist, der sich in seinen Lichtreflexions- und Lichtabsorptionseigenschaften von der Abschirmflagge (11) unterscheidet und abnehmbar über die Abschirmflagge (11) gezogen werden kann.

11. Stativadapter, welcher mindestens einen sich in einer Längsrichtung erstreckenden zylinderförmigen Abschnitt (31) mit einem ersten Ende (25) und einem dem ersten Ende (25) gegenüberliegenden zweiten Ende (26) aufweist, wobei das zweite Ende (26) versehen ist mit einer in der Längsrichtung in den zylinderförmigen Abschnitt (31) hineinragenden, zur Aufnahme einer Stativstange geeigneten ersten Sacklochöffnung (27), und/oder wobei in dem zylinderförmigen Abschnitt (31) quer zu der Längsrichtung eine zur Aufnahme einer Stativstange geeignete zweite Sacklochöffnung und/oder quer zu der Längsrichtung eine zur Aufnahme einer Stativstange (41, 44) geeignete durchgehende Öffnung (28) vorgesehen ist, **dadurch gekennzeichnet, dass**
- in einem bestimmten Abstand vom ersten Ende (25) in dem zylinderförmigen Abschnitt (31) mindestens zwei weitere, bevorzugterweise mindestens drei weitere, noch bevorzugter mindestens vier weitere Sacklochöffnungen (32, 33, 34, 35) vorgesehen sind, die jeweils quer zur Längsrichtung in den zylinderförmigen Abschnitt (31) hineinragen, in Umfangsrichtung des zylinderförmigen Abschnitts (31) voneinander versetzt sind und dafür geeignet sind, jeweils einen Stab (12, 13, 14, 15) aufzunehmen, so dass mit Hilfe dieser Stäbe (12, 13, 14, 15) dann um den Stativadapter herum eine Abschirmflagge (11) aufgespannt werden kann, und
- an dem ersten Ende (25) des zylinderförmigen Abschnitts (31) eine Arretiereinrichtung (30) zum Arretieren des Stativadapters in einer Schieneneinrichtung (4) vorgesehen ist.

12. Stativadapter nach Anspruch 11, **dadurch gekennzeichnet, dass** der Stativadapter die genannte zweite Sacklochöffnung und/oder die genannte durchgehende Öffnung (28) aufweist und die genannten weiteren Sacklochöffnungen (32, 33, 34, 35) vom zweiten Ende (26) weiter entfernt sind als die genannte zweite Sacklochöffnung und als die genannte durchgehende Öffnung (28).

13. Stativadapter nach Anspruch 11 oder nach Anspruch 12, **dadurch gekennzeichnet, dass** der genannte bestimmte Abstand vom ersten Ende (25) mindestens vier Zentimeter, bevorzugterweise mindestens fünf Zentimeter, noch bevorzugter mindestens sechs Zentimeter beträgt.

14. Stativadapter nach einem der Ansprüche 11 bis 13, **dadurch gekennzeichnet, dass** die Arretiereinrichtung (30) unlösbar an dem zylinderförmigen Abschnitt (31) fixiert ist.

15. Stativadapter nach einem der Ansprüche 11 bis 14, **dadurch gekennzeichnet, dass** die Arretiereinrichtung (30) so ausgebildet ist, dass der zylinderförmige Abschnitt (31) des Stativadapters einerseits und die Schieneneinrichtung (4) andererseits um eine Achse, die einer Längsachse des zylinderförmigen Abschnitts (31) entspricht, relativ gegeneinander gedreht und in beliebiger radialer Stellung des Drehweges arretiert werden können.

## Claims

1. Combination device, comprising a shielding flag device in combination with a reflector device, wherein the reflector device is a sheet-like structure (1) with a front side (2) and a rear side (3), the front side (2) is designed to be light-reflecting and the rear side (3) is provided with a rail device (4), which is arranged such that a further provided coupling device (5, 36) adapted to the rail device (4) can be arrestably engaged therein, so that a position of the rail device (4) relative to the coupling device (5, 36) can be adjustably changed in the longitudinal direction of the rail device (4) and the coupling device (5, 36) can be arrested in the rail device (4) in several different positions with respect to the longitudinal direction of the rail device (4), and wherein the coupling device (5, 36) is provided and designed accordingly for releasable attachment of the sheet-like structure (1) provided with the rail device (4) to a tripod device (6, 7, 41, 44) and/or to a suspension device, **characterized in that** the coupling device (5, 36) is arranged such that it serves as a base for a shielding flag (11) spanned around it and the shielding flag (11) is designed and matched to the sheet-like structure (1) such that there is at least a first arrestable position of the coupling device (5, 36) in the rail device (4) such that in this first arrestable position of the coupling device (5, 36) in the rail device (4), when viewing the combination of the shielding flag device and the reflector device from the front side (2), the shielding flag (11) protrudes beyond the edge of the sheet-like structure (1) at every point of an entire edge of the sheet-like structure (1) and thus the front side (2) is completely framed by the shielding flag (11) when the coupling device (5, 36) is in the said first arrestable position in the rail device (4).

2. Combination device, comprising a shielding flag device in combination with a reflector device, wherein the reflector device is a sheet-like structure (1) with a front side (2) and a rear side (3), the front side (2) is designed to be light-reflecting and the rear side (3) is provided with a rail device (4), which is arranged such that a further provided coupling device (5, 36) adapted to the rail device (4) can be arrestably engaged therein, so that a position of the rail device (4) relative to the coupling device (5, 36) can be adjustably changed in the longitudinal direction of the rail device (4) and the coupling device (5, 36) can be arrested in the rail device (4) in several different positions with respect to the longitudinal direction of the rail device (4), and wherein the coupling device (5, 36) is provided and designed accordingly for releasable attachment of the sheet-like structure (1) provided with the rail device (4) to a tripod device (6, 7, 41, 44) and/or to a suspension device, wherein both the reflector device, i.e. its sheet-like structure (1), and the shielding flag (11) are rectangular, **characterized in that** the coupling device (5, 36) is arranged such that it serves as a base for a shielding flag (11) spanned around it and the sheet-like structure (1), the shielding flag (11), the rail device (4) and the coupling device (5, 36) are arranged and matched to each other such that there is an arrestable position of the coupling device (5, 36) in the rail device (4) such that in this just mentioned arrestable position of the coupling device (5, 36) in the rail device (4), when viewing the combination of the shielding flag device and the reflector device from the front side (2), the shielding flag (11) protrudes beyond the respective edge of the sheet-like structure (1) at every point of the edge on three edges of the sheet-like structure (1) and does not protrude beyond the respective edge of the sheet-like structure (1) at any point of the edge on one edge of the sheet-like structure (1).

3. Combination device according to claim 1, **characterized in that** both the reflector device, i.e. its sheet-like structure (1), and the shielding flag (11) are rectangular and the sheet-like structure (1), the shielding flag (11), the rail device (4) and the coupling device (5, 36) are arranged and matched to each other such that there is a second arrestable position of the coupling device (5, 36) in the rail device (4) such that in this second arrestable position of the coupling device (5, 36) in the rail device (4), when viewing the combination of the shielding flag device and the reflector device from the front side (2), the shielding flag (11) protrudes beyond the respective edge of the sheet-like structure (1) at every point of the edge on three edges of the sheet-like structure (1) and does not protrude beyond the respective edge of the sheet-like structure (1) at any point of the edge on one edge of the sheet-like structure (1).

4. Combination device according to claim 2 or according to claim 3, **characterized in that** the sheet-like structure (1), the shielding flag (11), the rail device (4) and the coupling device (5, 36) are arranged and matched to each other such that there is a third arrestable position of the coupling device (5, 36) in the rail device (4) such that in this third arrestable position of the coupling device (5, 36) in the rail device (4), when viewing the combination of the shielding flag device and the reflector device from the front side (2), the shielding flag (11) protrudes beyond the respective edge of the sheet-like structure (1) at every point of the edge on three edges of the sheet-like structure (1) and does not protrude beyond the respective edge of the sheet-like structure (1) at any point of the edge on one edge of the sheet-like structure (1), wherein
with regard to the back reference to claim 2, the edge of the sheet-like structure (1), at which the shielding flag (11) does not protrude beyond the edge of the sheet-like structure (1) in the third arrestable position of the coupling device (5, 36) in the rail device (4), is opposite to that edge of the sheet-like structure (1), at which the shielding flag (11) does not protrude beyond the edge of the sheet-like structure (1) in the arrestable position mentioned in claim 2 of the coupling device (5, 36) in the rail device (4), and
with regard to the back reference to claim 3, the edge of the sheet-like structure (1), at which the shielding flag (11) does not protrude beyond the edge of the sheet-like structure (1) in the third arrestable position of the coupling device (5, 36) in the rail device (4), is opposite to that edge of the sheet-like structure (1), at which the shielding flag (11) does not protrude beyond the edge of the sheet-like structure (1) in the second arrestable position of the coupling device (5, 36) in the rail device (4).

5. Combination device according to one of the preceding claims, **characterized in that** the rail device (4) and the coupling device (5, 36) are arranged and matched to each other such that, with the position for arresting the coupling device (5, 36) in relation to the longitudinal direction of the rail device (4) fixed, there are at least two radially different positions for arresting the coupling device (5, 36) in the rail device (4), wherein a transition between these two just mentioned radially different positions for arresting the coupling device (5, 36) in the rail device (4) occurs by rotation of the rail device (4) relative to the coupling device (5, 36) by a certain angle of rotation and the said rotation occurs around an imaginary axis that runs through both the front side (2) and the rear side (3) and the rail device (4) and the coupling device (5, 36) and is aligned orthogonally to the rail device (4).

6. Combination device according to claim 5, **characterized in that** the rail device (4) and the coupling device (5, 36) are arranged and matched to each other such that the coupling device (5, 36) can be arrested in the rail device (4) in any rotational position with respect to a rotation of the rail device (4) relative to the coupling device (5, 36) around the said imaginary axis.

7. Combination device according to one of the preceding claims, **characterized in that** the coupling device (36) is designed such that it allows the sheet-like structure (1) to be adjusted both parallel to a plane in which the shielding flag (11) is spanned, and tilted in different directions and angles to the plane in which the shielding flag (11) is spanned.

8. Combination device according to claim 7, **characterized in that** the coupling device (36) is arranged such that it has an elongated flexible section (37), which is designed such that it can indeed be bent with manual force, but remains in its shape achieved as a result of this bending as long as it is not bent into another shape by renewed application of force, and that by bending the said elongated flexible section (37), different orientations of the sheet-like structure (1) in space can be set without changing the position of the shielding flag (11) in space.

9. Combination device according to one of the preceding claims, **characterized in that** it is arranged and designed such that the shielding flag (11) is exchangeable.

10. Combination device according to one of the preceding claims, **characterized in that** it is arranged and designed such that at least one shielding flag accessory is provided, which differs in its light reflection and light absorption properties from the shielding flag (11) and can be removably pulled over the shielding flag (11).

11. Tripod adapter, which has at least one cylindrical section (31) extending in a longitudinal direction with a first end (25) and a second end (26) opposite the first end (25), wherein the second end (26) is provided with a first blind hole opening (27) extending in the longitudinal direction into the cylindrical section (31) and suitable for receiving a tripod rod, and/or wherein in the cylindrical section (31) transversely to the longitudinal direction a second blind hole opening suitable for receiving a tripod rod and/or transversely to the longitudinal direction a through opening (28) suitable for receiving a tripod rod (41, 44) is provided, **characterized in that**
at a certain distance from the first end (25) in the cylindrical section (31), at least two further, preferably at least three further, even more preferably at least four further blind hole openings (32, 33, 34, 35) are provided, which each extend transversely to the longitudinal direction into the cylindrical section (31), are offset from each other in the circumferential direction of the cylindrical section (31) and are suitable for receiving a rod (12, 13, 14, 15) each, so that with the help of these rods (12, 13, 14, 15) a shielding flag (11) can then be spanned around the tripod adapter, and
at the first end (25) of the cylindrical section (31), an arresting device (30) for arresting the tripod adapter in a rail device (4) is provided.

12. Tripod adapter according to claim 11, **characterized in that** the tripod adapter has the said second blind hole opening and/or the said through opening (28) and the said further blind hole openings (32, 33, 34, 35) are further away from the second end (26) than the said second blind hole opening and than the said through opening (28).

13. Tripod adapter according to claim 11 or according to claim 12, **characterized in that** the said certain distance from the first end (25) is at least four centimeters, preferably at least five centimeters, even more preferably at least six centimeters.

14. Tripod adapter according to one of claims 11 to 13, **characterized in that** the arresting device (30) is inextricably fixed to the cylindrical section (31).

15. Tripod adapter according to one of claims 11 to 14, **characterized in that** the arresting device (30) is designed such that the cylindrical section (31) of the tripod adapter on the one hand and the rail device (4) on the other hand can be rotated relative to each other around an axis corresponding to a longitudinal axis of the cylindrical section (31) and can be arrested in any radial position of the rotational path.

## Revendications

1. Dispositif combiné, comprenant un dispositif de drapeau de protection en combinaison avec un dispositif réflecteur, le dispositif réflecteur étant une structure en feuille (1) avec une face avant (2) et une face arrière (3), la face avant (2) étant conçue pour réfléchir la lumière et la face arrière (3) étant pourvue d'un dispositif de rail (4), lequel est agencé de manière à ce qu'un dispositif d'accouplement (5, 36) prévu en outre et adapté au dispositif de rail (4) puisse s'y engager de manière verrouillable, de sorte qu'une position du dispositif de rail (4) par rapport au dispositif d'accouplement (5, 36) puisse être modifiée de manière ajustable dans le sens longitudinal du dispositif de rail (4) et que le dispositif d'accouplement (5, 36) puisse être verrouillé dans le dispositif de rail (4) dans plusieurs positions différentes par rapport au sens longitudinal du dispositif de rail (4), et le dispositif d'accouplement (5, 36) étant prévu et conçu en conséquence pour la fixation amovible de la structure en feuille (1) pourvue du dispositif de rail (4) à un dispositif de trépied (6, 7, 41, 44) et/ou à un dispositif de suspension, **caractérisé en ce que** le dispositif d'accouplement (5, 36) est agencé de manière à servir de base à un drapeau de protection (11) tendu autour de lui et le drapeau de protection (11) est conçu et adapté à la structure en feuille (1) de sorte qu'il existe au moins une première position de verrouillage du dispositif d'accouplement (5, 36) dans le dispositif de rail (4), de manière à ce que dans cette première position de verrouillage du dispositif d'accouplement (5, 36) dans le dispositif de rail (4), lors de l'observation de la combinaison du dispositif de drapeau de protection et du dispositif réflecteur depuis la face avant (2), le drapeau de protection (11) dépasse le bord de la structure en feuille (1) en tout point d'un bord entier de la structure en feuille (1) et ainsi la face avant (2) est entièrement encadrée par le drapeau de protection (11) lorsque le dispositif d'accouplement (5, 36) se trouve dans ladite première position de verrouillage dans le dispositif de rail (4).

2. Dispositif combiné, comprenant un dispositif de drapeau de protection en combinaison avec un dispositif réflecteur, le dispositif réflecteur étant une structure en feuille (1) avec une face avant (2) et une face arrière (3), la face avant (2) étant conçue pour réfléchir la lumière et la face arrière (3) étant pourvue d'un dispositif de rail (4), lequel est agencé de manière à ce qu'un dispositif d'accouplement (5, 36) prévu en outre et adapté au dispositif de rail (4) puisse s'y engager de manière verrouillable, de sorte qu'une position du dispositif de rail (4) par rapport au dispositif d'accouplement (5, 36) puisse être modifiée de manière ajustable dans le sens longitudinal du dispositif de rail (4) et que le dispositif d'accouplement (5, 36) puisse être verrouillé dans le dispositif de rail (4) dans plusieurs positions différentes par rapport au sens longitudinal du dispositif de rail (4), et le dispositif d'accouplement (5, 36) étant prévu et conçu en conséquence pour la fixation amovible de la structure en feuille (1) pourvue du dispositif de rail (4) à un dispositif de trépied (6, 7, 41, 44) et/ou à un dispositif de suspension, les deux, le dispositif réflecteur, c'est-à-dire sa structure en feuille (1), ainsi que le drapeau de protection (11) étant rectangulaires, **caractérisé en ce que** le dispositif d'accouplement (5, 36) est agencé de manière à servir de base à un drapeau de protection (11) tendu autour de lui et la structure en feuille (1), le drapeau de protection (11), le dispositif de rail (4) et le dispositif d'accouplement (5, 36) sont agencés et adaptés les uns aux autres de sorte qu'il existe une position de verrouillage du dispositif d'accouplement (5, 36) dans le dispositif de rail (4), de manière à ce que dans cette position de verrouillage du dispositif d'accouplement (5, 36) dans le dispositif de rail (4), lors de l'observation de la combinaison du dispositif de drapeau de protection et du dispositif réflecteur depuis la face avant (2), le drapeau de protection (11) dépasse le bord correspondant de la structure en feuille (1) en tout point du bord sur trois bords de la structure en feuille (1) et ne dépasse pas le bord correspondant de la structure en feuille (1) en aucun point du bord sur un bord de la structure en feuille (1).

3. Dispositif combiné selon la revendication 1, **caractérisé en ce que** les deux, le dispositif réflecteur, c'est-à-dire sa structure en feuille (1), ainsi que le drapeau de protection (11) sont rectangulaires et la structure en feuille (1), le drapeau de protection (11), le dispositif de rail (4) et le dispositif d'accouplement (5, 36) sont agencés et adaptés les uns aux autres de sorte qu'il existe une deuxième position de verrouillage du dispositif d'accouplement (5, 36) dans le dispositif de rail (4), de manière à ce que dans cette deuxième position de verrouillage du dispositif d'accouplement (5, 36) dans le dispositif de rail (4), lors de l'observation de la combinaison du dispositif de drapeau de protection et du dispositif réflecteur depuis la face avant (2), le drapeau de protection (11) dépasse le bord correspondant de la structure en feuille (1) en tout point du bord sur trois bords de la structure en feuille (1) et ne dépasse pas le bord correspondant de la structure en feuille (1) en aucun point du bord sur un bord de la structure en feuille (1).

4. Dispositif combiné selon la revendication 2 ou la revendication 3, **caractérisé en ce que** la structure en feuille (1), le drapeau de protection (11), le dispositif de rail (4) et le dispositif d'accouplement (5, 36) sont agencés et adaptés les uns aux autres de sorte qu'il existe une troisième position de verrouillage du dispositif d'accouplement (5, 36) dans le dispositif de rail (4), de manière à ce que dans cette troisième position de verrouillage du dispositif d'accouplement (5, 36) dans le dispositif de rail (4), lors de l'observation de la combinaison du dispositif de drapeau de protection et du dispositif réflecteur depuis la face avant (2), le drapeau de protection (11) dépasse le bord correspondant de la structure en feuille (1) en tout point du bord sur trois bords de la structure en feuille (1) et ne dépasse pas le bord correspondant de la structure en feuille (1) en aucun point du bord sur un bord de la structure en feuille (1), où
en ce qui concerne le renvoi à la revendication 2, le bord de la structure en feuille (1), sur lequel le drapeau de protection (11) ne dépasse pas le bord de la structure en feuille (1) dans la troisième position de verrouillage du dispositif d'accouplement (5, 36) dans le dispositif de rail (4), est opposé à ce bord de la structure en feuille (1), sur lequel le drapeau de protection (11) ne dépasse pas le bord de la structure en feuille (1) dans la position de verrouillage mentionnée dans la revendication 2 du dispositif d'accouplement (5, 36) dans le dispositif de rail (4), et
en ce qui concerne le renvoi à la revendication 3, le bord de la structure en feuille (1), sur lequel le drapeau de protection (11) ne dépasse pas le bord de la structure en feuille (1) dans la troisième position de verrouillage du dispositif d'accouplement (5, 36) dans le dispositif de rail (4), est opposé à ce bord de la structure en feuille (1), sur lequel le drapeau de protection (11) ne dépasse pas le bord de la structure en feuille (1) dans la deuxième position de verrouillage du dispositif d'accouplement (5, 36) dans le dispositif de rail (4).

5. Dispositif combiné selon l'une des revendications précédentes, **caractérisé en ce que** le dispositif de rail (4) et le dispositif d'accouplement (5, 36) sont agencés et adaptés l'un à l'autre de manière à ce que, la position pour le verrouillage du dispositif d'accouplement (5, 36) par rapport à la direction longitudinale du dispositif de rail (4) étant maintenue fixe, il existe au moins deux positions radialement différentes pour le verrouillage du dispositif d'accouplement (5, 36) dans le dispositif de rail (4), un passage entre ces deux positions radialement différentes du verrouillage du dispositif d'accouplement (5, 36) dans le dispositif de rail (4) s'effectuant par rotation du dispositif de rail (4) par rapport au dispositif d'accouplement (5, 36) d'un certain angle de rotation et ladite rotation s'effectuant autour d'un axe imaginaire qui passe à la fois par la face avant (2) et par la face arrière (3) ainsi que par le dispositif de rail (4) ainsi que par le dispositif d'accouplement (5, 36) et est aligné orthogonalement au dispositif de rail (4).

6. Dispositif combiné selon la revendication 5, **caractérisé en ce que** le dispositif de rail (4) et le dispositif d'accouplement (5, 36) sont agencés et adaptés l'un à l'autre de manière à ce que le dispositif d'accouplement (5, 36) puisse être verrouillé dans le dispositif de rail (4) dans toute position de rotation par rapport à une rotation du dispositif de rail (4) par rapport au dispositif d'accouplement (5, 36) autour dudit axe imaginaire.

7. Dispositif combiné selon l'une des revendications précédentes, **caractérisé en ce que** le dispositif d'accouplement (36) est conçu de manière à permettre de régler la structure en feuille (1) aussi bien parallèlement à un plan dans lequel le drapeau de protection (11) est tendu, que inclinée dans différentes directions et angles par rapport au plan dans lequel le drapeau de protection (11) est tendu.

8. Dispositif combiné selon la revendication 7, **caractérisé en ce que** le dispositif d'accouplement (36) est agencé de manière à présenter une section flexible allongée (37), laquelle est conçue de manière à pouvoir être courbée avec un effort manuel, mais à conserver sa forme acquise suite à cette courbure tant qu'elle n'est pas courbée dans une autre forme par un nouvel effort, et qu'au moyen du courbure de ladite section flexible allongée (37), différentes orientations de la structure en feuille (1) dans l'espace peuvent être réglées sans que la position du drapeau de protection (11) dans l'espace ne soit modifiée.

9. Dispositif combiné selon l'une des revendications précédentes, **caractérisé en ce qu'**il est agencé et conçu de manière à ce que le drapeau de protection (11) soit interchangeable.

10. Dispositif combiné selon l'une des revendications précédentes, **caractérisé en ce qu'**il est agencé et conçu de manière à ce qu'au moins un accessoire de drapeau de protection soit prévu, lequel diffère de par ses propriétés de réflexion et d'absorption de la lumière du drapeau de protection (11) et peut être tiré de manière amovible sur le drapeau de protection (11).

11. Adaptateur de trépied, lequel présente au moins une section cylindrique (31) s'étendant dans une direction longitudinale avec une première extrémité (25) et une deuxième extrémité (26) opposée à la première extrémité (25), la deuxième extrémité (26) étant pourvue d'une première ouverture en trou borgne (27) s'étendant dans le sens longitudinal dans la section cylindrique (31), apte à recevoir une tige de trépied, et/ou la section cylindrique (31) étant pourvue transversalement au sens longitudinal d'une deuxième ouverture en trou borgne apte à recevoir une tige de trépied et/ou transversalement au sens longitudinal d'une ouverture traversante (28) apte à recevoir une tige de trépied (41, 44), **caractérisé en ce que**
à une certaine distance de la première extrémité (25) dans la section cylindrique (31), au moins deux autres, de préférence au moins trois autres, plus préférablement au moins quatre autres ouvertures en trou borgne (32, 33, 34, 35) sont prévues, qui s'étendent chacune transversalement au sens longitudinal dans la section cylindrique (31), sont décalées les unes par rapport aux autres dans le sens circonférentiel de la section cylindrique (31) et sont aptes à recevoir chacune une tige (12, 13, 14, 15), de sorte qu'à l'aide de ces tiges (12, 13, 14, 15), un drapeau de protection (11) puisse ensuite être tendu autour de l'adaptateur de trépied, et
à la première extrémité (25) de la section cylindrique (31), un dispositif de verrouillage (30) pour le verrouillage de l'adaptateur de trépied dans un dispositif de rail (4) est prévu.

12. Adaptateur de trépied selon la revendication 11, **caractérisé en ce que** l'adaptateur de trépied présente ladite deuxième ouverture en trou borgne et/ou ladite ouverture traversante (28) et lesdites autres ouvertures en trou borgne (32, 33, 34, 35) sont plus éloignées de la deuxième extrémité (26) que ladite deuxième ouverture en trou borgne et que ladite ouverture traversante (28).

13. Adaptateur de trépied selon la revendication 11 ou la revendication 12, **caractérisé en ce que** ladite certaine distance de la première extrémité (25) est d'au moins quatre centimètres, de préférence d'au moins cinq centimètres, plus préférablement d'au moins six centimètres.

14. Adaptateur de trépied selon l'une des revendications 11 à 13, **caractérisé en ce que** le dispositif de verrouillage (30) est fixé de manière indissociable à la section cylindrique (31).

15. Adaptateur de trépied selon l'une des revendications 11 à 14, **caractérisé en ce que** le dispositif de verrouillage (30) est conçu de manière à ce que la section cylindrique (31) de l'adaptateur de trépied d'une part et le dispositif de rail (4) d'autre part puissent être tournés relativement l'un par rapport à l'autre autour d'un axe correspondant à un axe longitudinal de la section cylindrique (31) et puissent être verrouillés dans toute position radiale du chemin de rotation.
